# EUROPÄISCHE PATENTSCHRIFT

(11) **EP 0 989 897 B1**
(45) Veröffentlichungstag und Bekanntmachung des Hinweises auf die Patenterteilung: **26.03.2003**
(21) Anmeldenummer: 98934957.6
(22) Anmeldetag: 13.06.1998
(51) Int. Cl.: B01D 29/13, D21D 5/16, B07B 1/46

(54) **STABSIEBKORB FÜR FASERSUSPENSIONEN UND VERFAHREN ZU SEINER HERSTELLUNG**
BAR SCREEN BASKET FOR FIBER SUSPENSIONS AND METHOD FOR THE PRODUCTION THEREOF
TAMIS A BARRES POUR SUSPENSIONS DE FIBRES ET SON PROCEDE DE PRODUCTION

(30) Priorität: 18.06.1997 DE 19725737
(43) Veröffentlichungstag der Anmeldung: 05.04.2000
(73) Patentinhaber: Voith Paper Patent GmbH, 89522 Heidenheim (DE)
(72) Erfinder: CZERWONIAK, Erich, D-72793 Pfullingen (DE); HUTZLER, Hagen, Wilhelm, D-72764 Reutlingen (DE); PFEFFER, Jochen, Gustav, D-72800 Eningen (DE)
(74) Vertreter: Hoeger, Stellrecht & Partner
(86) Internationale Anmeldenummer: EP9803574
(87) Internationale Veröffentlichungsnummer: WO98057723

(56) Entgegenhaltungen:
- EP-A- 0 499 154
- DE-C- 19 625 726
- US-A- 5 090 721
- US-A- 5 234 550
- US-A- 5 394 600

## Beschreibung

Die Erfindung betrifft ein Sieb für Fasersuspensionen mit einer bezüglich einer Siebachse im wesentlichen rotationssymmetrischen Form, dessen eine, erste Umfangsseite eine Einlaßseite und dessen anderen, zweite Umfangsseite eine Auslaßseite des Siebs für die Fasersuspension bildet, sowie mit einer Serie von Profilstäben, die sich quer zur Siebumfangsrichtung erstrecken, in Siebumfangsrichtung in gleichen Abständen voneinander angeordnet sind und zwischen sich schlitzförmige Sieböffnungen bilden, und mit wenigstens zwei in senkrecht zur Siebachse verlaufenden Ebenen liegenden und in Richtung der Siebachse im Abstand voneinander angeordneten Tragringen, von denen jeder in seinem der Siebeinlaßseite zugewandten ersten Randbereich eine Serie von der Siebeinlaßseite zu randoffenen Ausschnitten besitzt, in die die Profilstäbe eingesetzt sind, und zwar so, daß sie mit einem Teil ihres Querschnitts in radialer Richtung über die ersten Ränder der Tragringe überstehen.

Derartige sogenannte Stabsiebkörbe sind insbesondere bekannt aus der EP-B-0 417 408 und der dieser entsprechenden DE-A-39 27 748, der EP-A-0 499 154 und der dieser entsprechenden DE-A-41 04 615 sowie aus der EP-A-0 705 936.

Diese Veröffentlichungen beschreiben verschiedene Methoden zur Festlegung der Profilstäbe in den Ausschnitten der Tragringe, wobei bei allen diesen Stabsiebkörben deren Innenumfang die Einlaßseite für die zu sortierende Fasersuspension bildet.

Zur Herstellung des Stabsiebkorbs nach der EP-B-0 417 408 werden die randoffenen Ausschnitte in zunächst geraden oder nur leicht gebogenen Profilstabträgern erzeugt, welche später zu geschlossenen Tragringen gebogen werden. Die randoffenen Ausschnitte haben eine solche Form, daß sie in radialem Abstand vom ersten Rand der Profilstabträger, in den die Ausschnitte münden, jeweils eine Hinterschneidung bilden, und die Querschnittsform der Profilstäbe ist an die Gestalt der Ausschnitte so angepaßt, daß ein Vorsprung des Profilstabquerschnitts in diese Hinterschneidung eingreift und so die Profilstäbe formschlüssig in den Ausschnitten gehalten werden und quer zur Längsrichtung der Profilstabträger nicht aus den Ausschnitten herausgleiten können. Wenn dann die Profilstabträger zu geschlossenen Tragringen gebogen werden, hat die dabei erzeugte Verengung der Ausschnitte zur Folge, daß die Profilstäbe in den Ausschnitten der Tragringe eingespannt sind. Sowohl die Profilstabträger, als auch die schließlich aus diesen erzeugten Tragringe dieses bekannten Stabsiebkorbs haben eine einem flachen Rechteck entsprechende Querschnittsform.

Von diesem bekannten Stabsiebkorb unterscheidet sich der Stabsiebkorb nach der EP-A-0 499 154 bzw. der DE-A-41 04 615 nur dadurch, daß es die Gestaltung der Hinterschneidungen der Ausschnitte der Profilstabträger und der in diese Hinterschneidungen eingreifenden Vorsprünge der Profilstäbe erlaubt, die Profilstäbe quer zu ihrer Längsrichtung in die randoffenen Ausschnitte der Profilstabträger einzuführen, wobei sich eine Art Schnappverschluß ergibt, durch den die Profilstäbe daran gehindert werden, quer zu ihrer Längsrichtung wieder aus den Ausschnitten der Profilstabträger herauszugleiten. Während also bei der Herstellung des Stabsiebkorbs nach der EP-B-0 417 408 die Profilstäbe in ihrer Längsrichtung in die Ausschnitte der Profilstabträger eingeschoben werden, erfolgt bei der Herstellung des Stabsiebkorbs nach der EP-A-0 499 154 das Einführen der Profilstäbe in die Ausschnitte der Profilstabträger quer zur Längsrichtung der Profilstäbe. Sodann werden auch bei der Herstellung des Stabsiebkorbs nach der EP-A-0 499 154 die Profilstabträger zu geschlossenen Tragringen gebogen und dadurch die Profilstäbe in den Ausschnitten eingespannt.

Bei dem Stabsiebkorb nach der EP-A-0 705 936 haben die Profilstäbe einen T-förmigen Querschnitt und die randoffenen Ausschnitte der Tragringe die Form eines rechteckigen Schlitzes, in den in radialer Richtung von innen her die den Fuß des T-förmigen Querschnitts bildende Rippe eines Profilstabs eingeschoben wird. Sodann werden um die Tragringe Spannringe herumgelegt, welche die Tragringe im Sinne einer Durchmesserverkleinerung in radialer Richtung zusammenpressen, wodurch die besagten Rippen der Profiistäbe in den Tragringausschnitten eingespannt werden sollen.

In sogenannten Sortierern für Fasersuspensionen zur Herstellung von Papier, Karton und dergleichen werden nun Siebkörbe recht unterschiedlichen Durchmessers eingesetzt, wobei man jedoch aus Kostengründen bestrebt ist, stets Profilstäbe mit identischen Querschnittsformen und Querschnittsabmessungen zu verwenden. Bei den Stabsiebkörben nach der EP-B-0 417 408 und der EP-A-0 499 154 hängt nun aber die Größe der Einspannkräfte, durch die die Profilstäbe in den Tragringen festgehalten werden, ganz wesentlich vom Durchmesser der Tragringe ab, in die die Profilstabträger nach dem Einsetzen der Profilstäbe in die randoffenen Ausschnitte der Profilstabträger umgeformt werden, es sei denn, man würde die Gestalt bzw. Abmessungen der in den Profilstabträgern zu erzeugenden Ausschnitte in Abhängigkeit vom Durchmesser des herzustellenden Stabsiebkorbs variieren, eine Maßnahme, welche naturgemäß zu einer Erhöhung der Herstellkosten führt - mit unabhängig vom Siebkorbdurchmesser gestalteten Ausschnitten ergeben sich Einspannkräfte, die mit zunehmendem Siebkorbdurchmesser immer geringer werden. Bei der Herstellung der sich aus der EP-B-0 417 408 und der EP-A-0 499 154 bekannt gewordenen Stabsiebkörbe können sich außerdem die Profilstäbe in Stablängsrichtung gegenüber den Profilstabträgern noch verschieben, was sich während des Biegens der Profilstabträger zu geschlossenen Tragringen als hinderlich erweisen kann - erst durch diesen Biegevorgang werden ja die Profilstäbe in den Ausschnitten eingespannt, und natürlich müssen bei einem fertigen Stabsiebkorb die einen bzw. anderen Enden aller Profilstäbe in derselben, senkrecht zur Siebachse verlaufenden Ebene liegen.

Die sich aus der EP-A-0 705 936 ergebende Festlegung der Profilstäbe in den Tragringen dürfte nicht nur deshalb problematisch sein, weil das Anbringen und Schließen der die Tragringe in radialer Richtung nach innen pressenden Spannringe problematisch erscheint, wenn hinreichend große Einspannkräfte erzeugt werden sollen, sondern dieser bekannte Stabsiebkorb erfordert eben auch noch zusätzlich das Herstellen und Anbringen der Spannringe.

Der Erfindung lag nun die Aufgabe zugrunde, einen Stabsiebkorb und ein Verfahren zu seiner Herstellung zu schaffen, der bzw. das es nicht nur ermöglicht, verhältnismäßig einfach die Profilstäbe dauerhaft präzise an den Tragringen festzulegen, sondern auch die Möglichkeit eröffnet, Siebkörbe recht unterschiedlichen Durchmessers unter Verwendung von Profilstäben ein und desselben Querschnitts sowie von Profilstabträgern mit ein und derselben Ausschnittsform herzustellen.

Zur Lösung dieser Aufgabe wird ausgegangen von einem Sieb für Fasersuspensionen mit einer bezüglich einer Siebachse im wesentlichen rotationssymmetrischen Form, dessen eine, erste Umfangsseite eine Einlaßseite und dessen andere, zweite Umfangsseite eine Auslaßseite des Siebs für die Fasersuspension bildet, mit einer Serie von Profilstäben, welche sich quer zur Siebumfangsrichtung erstrecken, in Siebumfangsrichtung in gleichen Abständen voneinander angeordnet sind sowie zwischen sich schlitzförmige Sieböffnungen bilden und deren Querschnitte jeweils eine längliche Form mit einem ersten, von der Siebauslaßseite abgekehrten Endbereich und einem zweiten, von der Siebeinlaßseite abgekehrten Endbereich besitzen, sowie mit wenigstens zwei in senkrecht zur Siebachse verlaufenden Ebenen liegenden und in Richtung der Siebachse im Abstand voneinander angeordneten Tragringen aus plastisch verformbarem Material, von denen jeder in seinem der Siebeinlaßseite zugewandten ersten Randbereich eine Serie von der Siebeinlaßseite zu randoffenen Ausschnitten besitzt, deren Form - in Richtung der Siebachse gesehen - der Gestalt der in den Ausschnitten liegenden zweiten Querschnittendbereiche der Profilstäbe entspricht und in radialem Abstand von dem der Siebeinlaßseite zugekehrten, ersten Rand des Tragrings eine Hinterschneidung bildet, in welche ein Vorsprung des Profilstabquerschnitts eingreift, so daß die Profilstäbe mit ihren zweiten Querschnittendbereichen in bezüglich der Siebachse radialer Richtung sowie in Siebumfangsrichtung formschlüssig in den Tragringausschnitten gehalten sind, wobei die Profilstäbe in radialer Richtung über die ersten Ränder der Tragringe überstehen und infolge einer plastischen Verformung der Tragringe mit ihren zweiten Querschnittendbereichen in den Tragringausschnitten eingespannt sind.

Erfindungsgemäß wird ein solches Sieb nun so gestaltet, daß die Tragringe auf der der Siebauslaßseite zugewandten Seite der Profilstäbe derart plastisch verformte Bereiche aufweisen, daß infolge einer Verdrängung von Tragringmaterial in Richtung auf die Siebeinlaßseite die Profilstabvorsprünge in dieser Richtung gegen die Hinterschneidungen angepreßt werden.

Bei der Herstellung eines erfindungsgemäßen Siebkorbs wird also auf der der Siebauslaßseite zugewandten Seite eines jeden Profilstabs Tragringmaterial in Richtung auf den benachbarten Profilstab verdrängt, und zwar so, daß dadurch dieser Profilstab durch das verdrängte Tragringmaterial und/oder durch eine Verlagerung des der Siebauslaßseite zugewandten Randbereichs des diesen Profilstab haltenden Ausschnitts relativ zum Tragring in Richtung auf die Siebeinlaßseite etwas verlagert und dadurch mit seinem Vorsprung in dieser Richtung gegen die vom Tragringausschnitt gebildete Hinterschneidung angepreßt und so auch in radialer Richtung des Siebkorbs dauerhaft präzise fixiert wird. Gleichzeitig werden die zuvor in ihrer Längsrichtung in die Ausschnitte eingeschobenen Profilstäbe auch in Stablängsrichtung fixiert.

Da die erfindungsgemäße Art der Befestigung der Profilstäbe an den Tragringen bzw. den Profilstabträgern keine bestimmte Gestaltung der über die Tragringe in bezüglich der Siebachse radialer Richtung nach innen bzw. nach außen überstehenden Bereiche der Profilstäbe voraussetzt, können diese Bereiche erfindungsgemäß auch in einer neuartigen und besonders vorteilhaften Weise gestaltet werden:

Bei den bekannten sogenannten Stabsiebkörben sind - betrachtet man einen bestimmten Siebkorb - alle Profilstäbe gleich ausgebildet, und jeder Profilstab besitzt über seine ganze Länge denselben Querschnitt. Im Gegensatz zu dieser bekannten Gestaltung der Profilstäbe wird nun erfindungsgemäß vorgeschlagen, in Siebumfangsrichtung hintereinander angeordnete Profilstäbe an ihren von der Siebauslaßseite abgekehrten ersten Längsseiten derart unterschiedlich auszubilden, daß die Profilstäbe einer an der Siebeinlaßseite in Siebumfangsrichtung strömenden Fasersuspension eine in Richtung der Siebachse gerichtete axiale Strömungskomponente verleihen oder eine solche axiale Strömungskomponente vergrößern. Hierzu könnten die Profilstäbe an ihren genannten ersten Längsseiten z. B. mit Nuten oder Rippen versehen werden, welche mit der Siebumfangsrichtung einen spitzen Winkel bilden und so an der Einlaßseite des Stabsiebkorbs für die dort umlaufende, zu sortierende Fasersuspension schräg gestellte Leit- bzw. Umlenkflächen bilden.

Wenn vorstehend von in Siebumfangsrichtung hintereinander angeordneten Profilstäben die Rede ist, so darf dies nicht derart einengend interpretiert werden, als ob alle Profilstäbe oder in Siebumfangsrichtung unmittelbar aufeinanderfolgende Profilstäbe an ihren ersten Längsseiten erfindungsgemäß gestaltet sein müßten, obwohl derartige Ausführungsformen bevorzugt werden. Die Profilstäbe müssen an ihren ersten Längsseiten auch nicht über die ganze Profilstablänge erfindungsgemäß gestaltet sein, da es unter Umständen ausreicht, nur in einem axialen Abschnitt des Siebs Mittel vorzusehen, welche eine axiale Strömungskomponente entstehen lassen oder eine solche Strömungskomponente vergrößern - der damit erzielbare Vorteil wird später noch erläutert werden.

Erfindungsgemäß einzusetzende Profilstäbe lassen sich dann verhältnismäßig einfach herstellen, wenn die Profilstäbe an ihren ersten Längsseiten abschnittsweise unterschiedlich weit über die ersten Tragringränder überstehen; derart gestaltete Profilstäbe lassen sich z. B. aus stranggepreßten Profilstäben mit überall gleichem Querschnitt durch eine abschnittsweise erfolgende zerspanende Bearbeitung, wie Fräsen, herstellen. Sind dann am Stabsiebkorb die unterschiedlich weit über die Tragringe überstehenden Profilstababschnitte nach Art eines schraubenlinienförmigen Musters angeordnet, verleihen sie einer an der Siebeinlaßseite in Siebumfangsrichtung strömenden Fasersuspension nicht nur eine in Richtung der Siebachse gerichtete axiale Strömungskomponente oder führen zur Vergrößerung einer solchen axialen Strömungskomponente, sondern die über die Tragringe unterschiedlich weit überstehenden Profilstababschnitte bewirken auch noch eine Auflockerung des sogenannten Spuckstoffs, wodurch das Beschädigungsrisiko von Stabsiebkörbe enthaltenden Sortierern herabgesetzt wird: Bei Sortierern für Fasersuspensionen bildet der Innenumfang des Stabsiebkorbs meist dessen Einlaßseite und innerhalb des Siebkorbs rotiert um dessen Achse ein Rotor, der mit Leisten versehen ist, welche in geringem Abstand von der Einlaßseite des Siebs an dieser vorbeilaufen, sich entweder parallel zur Siebachse erstrecken oder mit deren Richtung einen kleinen spitzen Winkel bilden und dazu dienen, an der Einlaßseite des Siebs in der zu sortierenden Fasersuspension positive und negative Druckstöße zu erzeugen. Fasern, Faserzusammenballungen und in der zu sortierenden Fasersuspension enthaltene Verunreinigungen, welche die Sieböffnungen des Siebkorbs nicht passieren (d. h. der sogenannte Spuckstoff), haben nun die Tendenz, sich an den in Umlaufrichtung vorn liegenden Flanken der Rotorleisten anzusammeln, und solche Spuckstoffzusammenballungen können zu einem Bruch des Siebkorbs führen, wenn sie sich zwischen einer umlaufenden Rotorleiste und dem Siebkorb "verketten". Bei sogenannten Drucksortierern, in die die zu sortierende Fasersuspension unter Druck einströmt und in denen der Siebkorb an seinem einen axialen Ende mit der zu sortierenden Fasersuspension beaufschlagt wird, während derjenige Teil der zu sortierenden Fasersuspension, welcher die Sieböffnungen nicht passiert, den Siebkorb an dessen anderem axialen Ende verläßt, hat die unter dem Einfluß des Rotors an der Einlaßseite des Siebkorbs im wesentlichen in Siebumfängsrichtung entlangströmende Fasersuspension stets auch eine in Richtung der Siebachse gerichtete axiale Strömungskomponente, und zwar aufgrund des vorstehend beschriebenen Anströmens des Siebkorbs mit der zu sortierenden Fasersuspension sowie der Tatsache, daß der Spuckstoff den Siebkorb an seinem anderen Ende verläßt; infolgedessen wandern die vorstehend beschriebenen Spuckstoffansammlungen an den Rotorleisten entlang und verstärken sich immer mehr, es sei denn, der Rotor wird nicht mit über seine ganze axiale Länge durchgehenden Leisten versehen, sondern - wie an sich bekannt - mit Leistenabschnitten, zwischen denen sich Lücken befinden und die oft auch in Rotorumfangsrichtung gegeneinander versetzt sind. Ähnlich wie diese Lücken zwischen den Leistenabschnitten eines Rotors führen nun auch die erfindungsgemäß angeordneten, über die ersten Tragringränder überstehenden Profilstababschnitte zu einer Auflockerung von Spuckstoffzusammenballungen und vermindern so das Beschädigungsrisiko für den Stabsiebkorb.

Um die an der Siebeinlaßseite vorbeiströmende, zu sortierende Fasersuspension mit einer axialen Strömungskomponente in Richtung der Siebachse bzw. mit einer vergrößerten solchen axialen Strömungskomponente zu versehen, empfiehlt sich die Maßnahme nach Anspruch 20, wobei die Ansprüche 21 bis 28 noch weitere Verbesserungen definieren. Sogenannte Stabsiebkörbe, bei denen die Profilstäbe an ihren der Siebeinlaßseite zugekehrten Längsseiten derart ausgebildet sind, daß die Profilstäbe einer an der Siebeinlaßseite in Siebumfangsrichtung strömenden Fasersuspension eine In Richtung der Siebachse gerichtete axiale Strömungskomponente verleihen, sind an sich bekannt, und zwar aus der DE-C-196 25 726 sowie der US-A-5 234 550, wobei die DE-C-196 25 726 einen Stabsiebkorb zeigt, dessen Profilstäbe an der Siebeinlaßseite abschnittsweise unterschiedlich weit über die die Profilstäbe haltenden Tragringe überstehen.

Die Erfindung betrifft auch ein Verfahren zur Herstellung eines Siebs für Fasersuspensionen mit einer bezüglich einer Siebachse im wesentlichen rotationssymmetrischen Form, dessen eine, erste Umfängsseite eine Einlaßsefte und dessen andere, zweite Umfangsseite eine Auslaßseite des Siebs für die Fasersuspension bildet, mit einer Serie von Profilstäben, welche sich quer zur Siebumfangsrichtung erstrecken, in Siebumfangsrichtung in gleichen Abständen voneinander angeordnet sind sowie zwischen sich schlitzförmige Sieböffnungen bilden und deren Querschnitte jeweils eine längliche Form mit einem ersten, von der Siebauslaßseite abgekehrten Endbereich und einem zweiten, von der Siebeinlaßseite abgekehrten Endbereich besitzen, sowie mit wenigstens zwei in senkrecht zur Siebachse verlaufenden Ebenen liegenden und in Richtung der Siebachse im Abstand voneinander angeordneten ringförmigen Profilstabträgern aus plastisch verformbarem Material, von denen jeder in seinem der Siebeinlaßseite zugewandten ersten Randbereich eine Serie von der Siebeinlaßseite zu randoffenen Ausschnitten besitzt, deren Form - in Richtung der Siebachse gesehen - der Gestalt der in den Ausschnitten liegenden zweiten Querschnittendbereiche der Profilstäbe entspricht und in radialem Abstand von dem der Siebeinlaßseite zugekehrten, ersten Rand des Profilstabträgers eine Hinterschneidung bildet, in welche ein Vorsprung des Profilstabquerschnitts eingreift, so daß die Profilstäbe mit ihren zweiten Querschnittendbereichen in bezüglich der Siebachse radialer Richtung sowie in Siebumfangsrichtung formschlüssig in den Ausschnitten der Profilstabträger gehalten sind sowie mit ihren ersten Querschnittendbereichen in radialer Richtung über die ersten Ränder der Profilstabträger überstehen, wobei die Profilstabträger zunächst mit Ausschnitten versehen werden, welche etwas größer sind als die zweiten Querschnittendbereiche der Profilstabe, worauf die Profilstabe in die Profilstabträgerausschnitte eingesetzt und sodann durch eine plastische Verformung der Profilstabträger in deren Ausschnitten eingespannt werden.

Erfindungsgemäß wird ein solches Verfahren so gestaltet, daß die Profilstabträger auf der von ihren ersten Rändern abgewandten Seite der Profilstäbe derart plastisch verformt werden, daß infolge einer Verdrängung von Profilstabträgermaterial in Richtung auf die ersten Profilstabträgerränder die Profilstabvorsprünge in dieser Richtung gegen die Hinterschneidungen angepreßt werden.

Wenn dabei vorstehend davon die Rede war, daß die Profilstabträger zunächst mit Ausschnitten versehen werden, die etwas größer sind als die zweiten Querschnittendbereiche der Profilstäbe, so darf diese Aussage nicht so interpretiert werden, daß die Profilstabträgerausschnitte zunächst in jeder Richtung etwas größer sein müssen als die zweiten Querschnittendbereiche der Profilstäbe, da es die erfindungsgemäße Lösung der gestellten Aufgabe nur erforderlich macht, Profilstabträgermaterial in Richtung auf die ersten Profilstabträgerränder zu verdrängen, um die Profilstabvorsprünge in dieser Richtung gegen die von den Profilstabträgerausschnitten gebildeten Hinterschneidungen anzupressen.

Wie sich aus dem Vorstehenden ergibt, kann bei dem erfindungsgemäßen Herstellverfahren von geraden oder nur geringfügig gebogenen Profilstabträgern ausgegangen werden, in deren Ausschnitten die Profilstäbe durch Verdrängung von Profilstabträgermaterial eingespannt werden, worauf die Profilstabträger zu geschlossenen Ringen gebogen werden; ebensogut ist es aber auch möglich, die Profilstabträger mit oder ohne Profilstäbe zu geschlossenen Tragringen umzuformen und erst dann die in die Tragringausschnitte eingesetzten Profilstäbe durch Verdrängung von Profilstabträger- bzw. Tragringmaterial in den Ausschnitten zu fixieren. Fixiert man die Profilstäbe bereits an den noch nicht zu Tragringen umgeformten Profilstabträgern, so ergibt sich gegenüber dem Stand der Technik nach der EP-B-0 417 408 bzw. der EP-A-0 499 154 der Vorteil, daß sich bereits vor dem Biegen der Profilstabträger zu geschlossenen Tragringen ein festes Gitter ergibt, dessen Profilstäbe sich gegenüber den Profilstabträgern nicht mehr verschieben können, und zwar auch nicht während des Umformens der Profilstabträger zu geschlossenen Tragringen.

Die gemäß der Erfindung zu bewirkende Verdrängung von Profilstabträger- bzw. Tragringmaterial könnte z. B. dadurch erfolgen, daß man den von den Ausschnittöffnungen abgewandten Randbereich eines Profilstabträgers bzw. Tragrings mit zunächst rechteckigem Querschnitt zwischen zwei Druckwalzen bzw. -rollen mit gegeneinander und gegenüber der Ebene des Tragrings bzw. des Profilstabträgers gekippten Achsen so walzverformt, daß die Verformung eine Materialverdrängung in Richtung auf die Profilstäbe bewirkt. Alternativ könnte man in unmittelbarer Nachbarschaft eines jeden Profilstabs an einer oder beiden Seiten des Tragrings bzw. Profilstabträgers in diesem für jeden Profilstab eine diskrete Vertiefung einprägen, z. B. mittels eines Prägestempels. Bevorzugt werden jedoch Ausführungsformen, bei denen die verformten Tragring- bzw. Profilstabträgerbereiche eingepreßte Rinnen aufweisen, welche entlang der ganzen Siebstabserie verlaufen, und zwar insbesondere in unmittelbarer Nachbarschaft der Profilstäbe.

Im allgemeinen werden die Tragringe aus einem geeigneten Metall bzw. einer geeigneten Metallegierung bestehen, es ist jedoch grundsätzlich auch möglich, statt dessen ein hinreichend verschleißfestes Kunststoffmaterial zu verwenden, welches sich - gegebenenfalls unter Erwärmen - ausreichend plastisch verformen läßt, jedoch nicht zu einem Kriechen dergestalt neigt, daß dadurch die Einspannkräfte, durch die die Profilstäbe in den Tragringen fixiert werden, im Laufe der Zeit abgebaut werden.

Nachdem die Profilstabträger zu Ringen gebogen wurden, werden die letzteren dadurch geschlossen, daß die Enden der Profilstabträger miteinander verschweißt werden. Dadurch entstehen in den Tragringen Eigenspannungen, welche vor allem bei Sortierern, bei denen mit Hilfe eines Rotors nahe dem Siebkorb in der Fasersuspension positive und negative Druckstöße erzeugt werden, zu Dauerbrüchen in den Tragringen führen können. Zur Vermeidung dieses Risikos wird erfingungsgemäß vorgeschlagen, die geschweißten Tragringe mindestens im Bereich ihrer Schweißverbindungen einer Wärmebehandlung zu unterziehen, um so die durch das Schweißen erzeugten Eigenspannungen zu reduzieren oder ganz zu beseitigen. Erfolgt die Wärmebehandlung vor dem Festlegen der Profilstäbe in den Ausschnitten der Tragringe, ist es auch nicht erforderlich, die Wärmebehandlung eng auf die eigentliche Schweißstelle zu beschränken, um zu verhindern, daß durch die Wärmebehandlung die die Profilstäbe in den Tragringen fixierenden Einspannkräfte reduziert werden.

Bevorzugt werden metallische Profilstäbe, obwohl grundsätzlich auch Profilstäbe aus einem anderen Material denkbar sind, z. B. aus einem hinreichend harten und gegenüber einer Biegebeanspruchung hinreichend widerstandsfähigen Kunststoff, oder aus einem keramischen Material. Auch wird empfohlen, für die Profilstabe einen Werkstoff zu verwenden, dessen Festigkeit höher ist als die Festigkeit des für die Tragringe bzw. die Profilstabträger verwendeten Werkstoffs, um zu verhindern, daß beim Verformen der Profilstäbe bzw. Tragringe und dem dadurch bewirkten Anpressen der Ränder der Tragring- bzw. Profilstabträgerausschnitte gegen die Profilstäbe in letzteren Kerben entstehen können, die bei der Wechseldruckbeanspruchung des Siebs in einem Sortierer mit an der Siebeinlaßoder der Siebauslaßseite umlaufendem Rotor zu Dauerbrüchen an den Profilstäben führen könnten.

Weitere Merkmale besonders bevorzugter Ausführungsformen des erfindungsgemäßen Siebs bzw. des erfindungsgemäßen Herstellungsverfahrens ergeben sich aus den beigefügten Ansprüchen und/oder aus der nachfolgenden Beschreibung sowie der beigefügten zeichnerischen Darstellung zweier besonders vorteilhafter Ausführungsformen des erfindungsgemäßen Siebs und seiner Herstellung; in der Zeichnung zeigen:
- Fig. 1: eine perspektivische und weitgehend schematisierte Darstellung der ersten Ausführungsform des erfindungsgemäßen Stabsiebkorbs, welche nur einige wenige Profilstäbe erkennen läßt;
- Fig. 2: eine Draufsicht auf den in Fig. 1 dargestellten Stabsiebkorb, wobei wiederum nur einige wenige Profilstäbe gezeichnet wurden;
- Fig. 3: eine Draufsicht auf einen verhältnismäßig kurzen Abschnitt eines noch gestreckten bzw. geraden Profilstabträgers mit drei im Querschnitt gezeichneten Profilstäben, welche bereits in Ausschnitte des Profilstabträgers eingeschoben wurden, jedoch an letzterem noch nicht fixiert sind, d. h. also vor der erfindungsgemäßen plastischen Verformung des Profilstabträgers;
- Fig. 4: eine der Fig. 3 entsprechende Darstellung, jedoch nach der erfindungsgemäßen plastischen Verformung des Profilstabträgers zwecks Verdrängung von Profilstabträgermaterial in Richtung auf die Profilstäbe;
- Fig. 5: einen Schnitt nach der Linie 5-5 in Fig. 4;
- Fig. 6: eine der Fig. 5 entsprechende Darstellung, jedoch samt zwei Walzwerkzeugen zur erfindungsgemäßen plastischen Verformung des Profilstabträgers;
- Fig. 7: eine der Fig. 4 entsprechende Darstellung der zweiten Ausführungsform;
- Fig. 8: einen Teil einer Abwicklung der zweiten Ausführungsform des erfindungsgemäßen Stabsiebkorbs, und zwar einer Ansicht seiner Einlaßseite gesehen in Richtung des Pfeils X aus Fig. 7, und
- Fig. 9: eine Seitenansicht des über die Tragringe überstehenden Bereichs eines Profilstabs der zweiten Ausführungsform, gesehen in Richtung des Pfeils R aus Fig. 7, wobei jedoch nur ein Teil der Länge dieses Profilstabs dargestellt wurde.

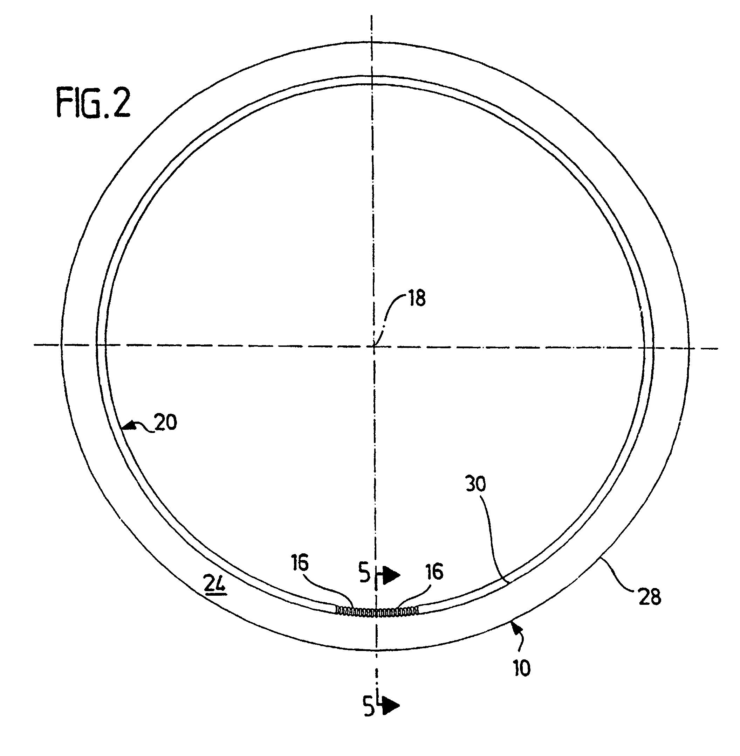

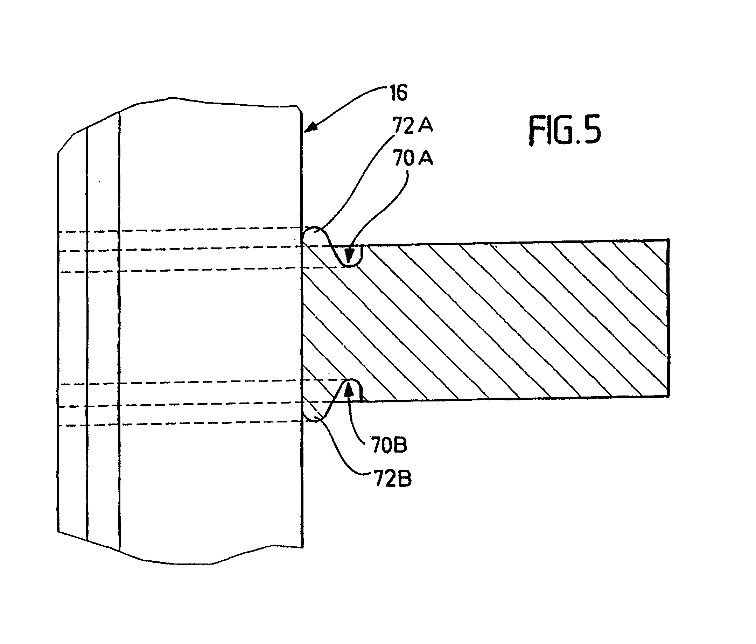

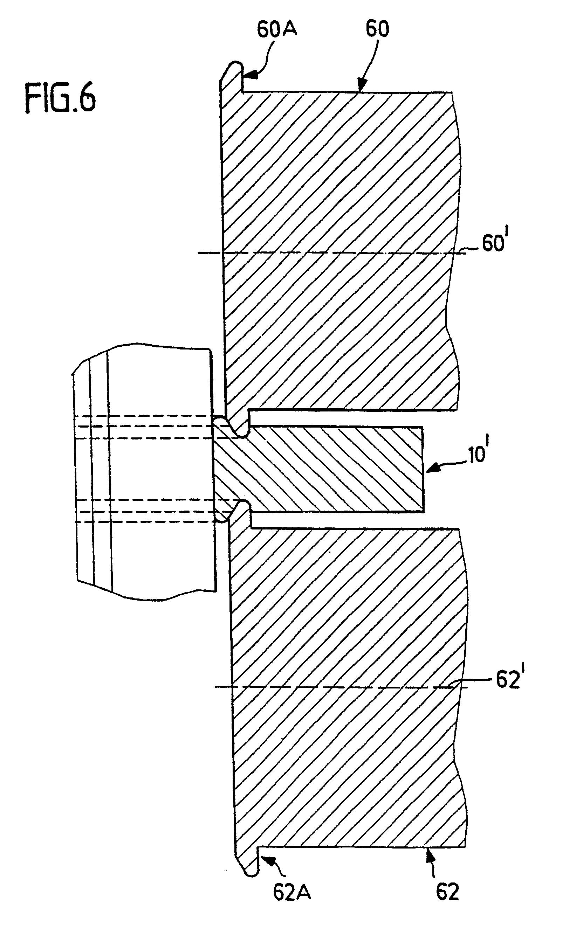

Ergänzend sei vorab bemerkt, daß die Fig. 5 auch einen Schnitt entsprechend der Linie 5-5 in Fig. 2 darstellen könnte und die Fig. 6 infolgedessen die auf den bereits geschlossenen Tragring einwirkenden Walzwerkzeuge.

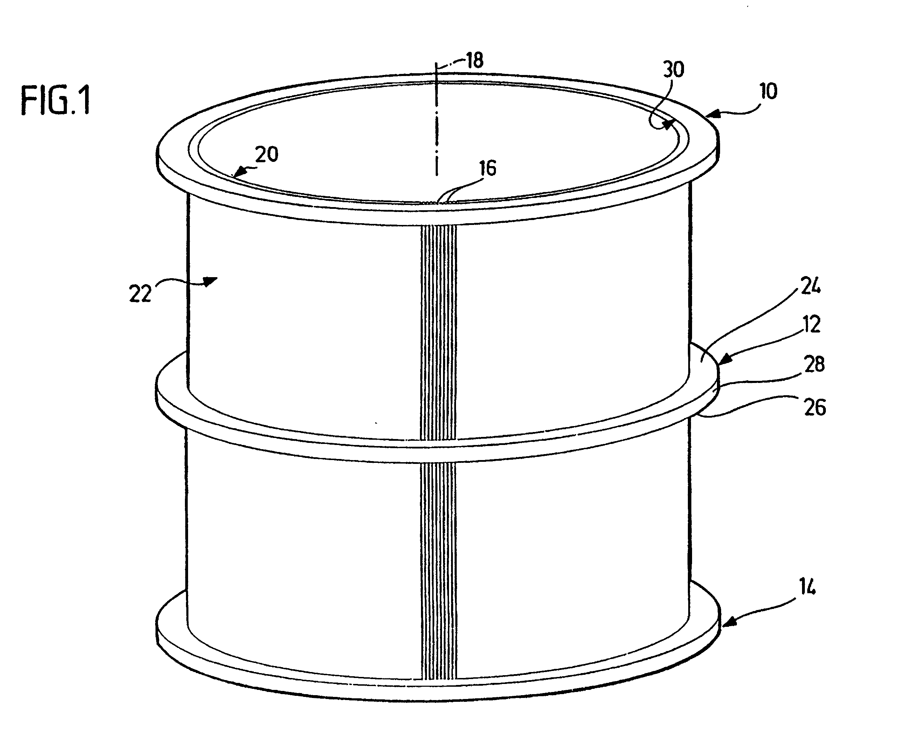

Die Figuren 1 und 2 lassen erkennen, daß der Stabsiebkorb aus drei Tragringen 10, 12 und 14 sowie aus mehreren Profilstäben 16 besteht, wobei letztere parallel zu einer Siebachse 18 verlaufen und die Tragringe in zur Siebachse senkrechten Ebenen liegen. Wie sich aus dem Folgenden noch ergeben wird, sind bei dem dargestellten Siebkorb die Profilstäbe 16 so ausgebildet und angeordnet, daß die Einlaßseite 20 für die zu sortierende Fasersuspension am Innenumfang des Siebkorbs liegt, die Auslaßseite 22 für die vom Siebkorb durchgelassene Fasersuspension an dessen Außenumfang. Jeder der insbesondere identisch ausgebildeten Tragringe 10, 12 und 14 hat einen Querschnitt in Form eines flachen Rechtecks und besitzt eine obere Flachseite 24, eine untere Flachseite 26, einen Außenrand 28 und einen Innenrand 30.

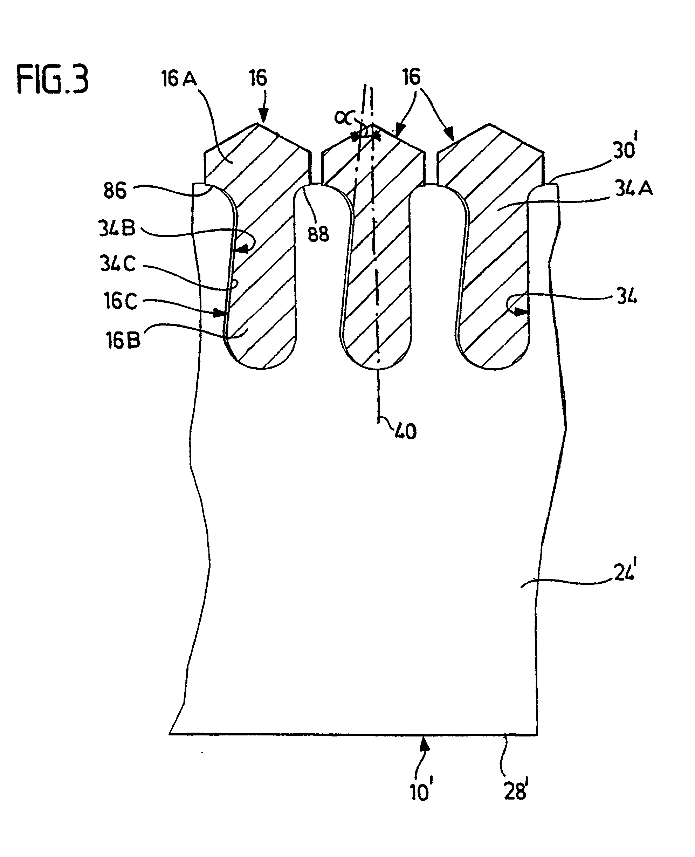

Die Fig. 3 zeigt einen kurzen Abschnitt eines noch geraden Profilstabträgers 10', welcher später durch Biegen zu dem geschlossenen Tragring 10 umgeformt werden soll. Der dem Innenrand 30 des Tragrings 10 entsprechende erste Rand des Profilstabträgers 10' wurde mit 30' bezeichnet, der dem Außenrand 28 des Tragrings 10 entsprechende zweite Rand des Profilstabträgers 10' mit 28', und die in Fig. 3 sichtbare obere Flachseite des Profilstabträgers wurde mit 24' bezeichnet. Für jeden Profilstab 16 hat der Profilstabträger 10' einen Ausschnitt 34, in den sich ein Profilstab 16 in Richtung der Längserstreckung des Profilstabs einschieben läßt. Alle Ausschnitte 34 sollen dieselbe Gestalt und dieselben Abmessungen haben, und gleiches gilt für die Profilstäbe 16. Der Querschnitt eines Profilstabs ist ungefähr pilzförmig mit einem einen ersten Querschnittendbereich 16A bildenden Pilzkopf und einem einen zweiten Querschnittendbereich 16B bildenden, ungefähr keulenförmigen Pilzfuß, wobei die Gestalt des zweiten Querschnittendbereichs 16B der Gestalt des Ausschnitts 34 entspricht, sieht man von einem verhältnismäßig geringen, in Fig. 3 erkennbaren Spiel des Profilstabs 16 im Ausschnitt 34 ab.

Die Form des Ausschnitts 34, dessen Flanken senkrecht zur oberen bzw. unteren Flachseite des Profilstabträgers 10' verlaufen, ist nun so gestaltet, daß der Ausschnitt 34 eine Engstelle 34A hat, zwischen der und dem dem zweiten Rand 28' des Profilstabträgers 10' zugewandten Ende des Ausschnitts 34 letzterer eine Hinterschneidung 34B bildet, in deren Bereich der Rand des Ausschnitts 34 eine ungefähr gerade Flanke 34C besitzt, die mit einer in Fig. 3 mit 40 bezeichneten, senkrecht zur Zeichnungsebene der Fig. 3 verlaufenden Ebene einen spitzen Winkel α bildet, der sich in Richtung auf den zweiten Rand 28' des Profilstabträgers 10' öffnet. Nach dem Umformen des Profilstabträgers 10' zum geschlossenen Tragring 10 bildet die Ebene 40 eine Durchmesserebene des Stabsiebkorbs.

Der zweite Querschnittendbereich 16B der Profilstäbe 16 bildet einen Vorsprung 16C, der in die Hinterschneidung 34B des zugeordneten Ausschnitts 34 eingreift, so daß sich schon vor der erfindungsgemäßen Verformung des Profilstabträgers 10' der Profilstab 16 nicht gemäß Fig. 3 nach oben aus dem Ausschnitt 34 herausziehen läßt. Wie die Fig. 3 gleichfalls erkennen läßt, liegt der Außenumfang eines jeden Profilstabs 16 im Bereich des zweiten Querschnittendbereichs 16B des Profilstabs schon vor der erfindungsgemäßen Verformung des Profilstabträgers 10' überall zumindest nahezu spielfrei gegen den Rand des zugeordneten Ausschnitts 34 an mit Ausnahme eines verhältnismäßig schmalen Spalts zwischen der Flanke 34C des Ausschnitts 34 und dem Vorsprung 16C des Profilstabs. Dieser Spalt wird durch die erfindungsgemäße Verformung des Profilstabträgers 10' in folgender Weise geschlossen:

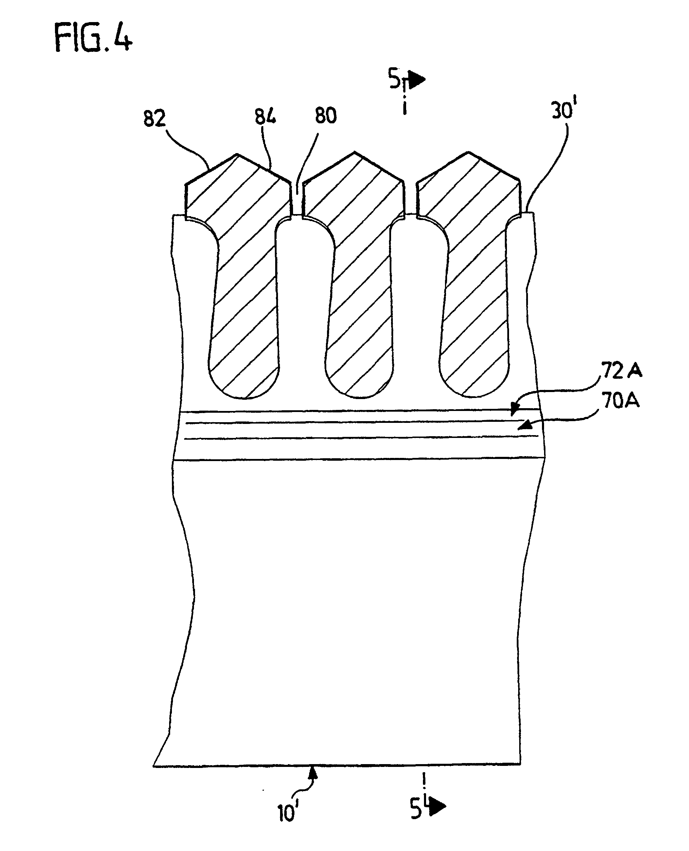

Gegen den Profilstabträger 10' (gegebenenfalls gegen den Tragring 10) wird von oben eine obere Druckrolle 60 und von unten eine untere Druckrolle 62 angepreßt (siehe Fig. 6), welche um zueinander und zu den Flachseiten des Profilstabträgers 10' bzw. des Tragrings 10 parallele Achsen 60' bzw. 62' frei drehbar sind (die Achsen 60', 62' verlaufen außerdem senkrecht zur Längsrichtung des Profilstabträgers 10' bzw. radial zur Siebachse 18). Die Druckrolle 60 und 62 werden unter Steuerung bzw. Regelung des Drucks, mit dem sie gemäß Fig. 6 in vertikaler Richtung gegen den Profilstabträger 10' bzw. den Tragring 10 angepreßt werden, an allen Profilstäben 16 vorbei dem Profilstabträger 10' entlanggeführt bzw. um den Tragring 10 herumgeführt und erzeugen so mit ihren in Fig. 6 erkennbaren Verdrängungsrippen 60A bzw. 62A an der oberen und an der unteren Flachseite des Profilstabträgers 10' bzw. des Tragrings 10 (gleiches gilt natürlich entsprechend für den Tragring 12 und den Tragring 14) in unmittelbarer Nachbarschaft der Profilstäbe 16 jeweils eine Rinne 70A bzw. 70B und infolge der in Fig. 6 erkennbaren erfindungsgemäßen Gestaltung des Profils der Verdrängungsrippe 60A bzw. 62A einen gegen die Profilstäbe 16 aufgeworfenen Wulst 72A bzw. 72B, so daß durch diese Materialverdrängung die Profilstäbe 16 geringfügig gemäß Fig. 3 nach oben verlagert werden (einschließlich des gemäß Fig. 3 unteren Randbereichs eines jeden der Ausschnitte 34) und auf diese Weise, wie in Fig. 4 erkennbar, der zuvor vorhandene Spalt zwischen der Flanke 34C der Ausschnitte 34 und dem Vorsprung 16C der Profilstäbe 16 geschlossen wird mit der Folge, daß die Profilstabe in den Ausschnitten eingespannt sind. Der in Fig. 3 erkennbare Winkel α wird dabei zweckmäßigerweise so bemessen, daß nach der erfindungsgemäßen Verformung zwischen der Flanke 34C und der dagegen angepreßten Flanke des Vorsprungs 16C Selbsthemmung gegeben ist.

Nimmt man nun an, die Fig. 4 stelle einen Ausschnitt aus Fig. 2 dar und zeige nicht den Profilstabträger 10', sondern bereits den oberen Tragring 10, erkennt man, daß die Profilstäbe 16 auch nach Umformung der Profilstabträger in geschlossene Tragringe zwischen sich schlitzförmige Sieböffnungen 80 bilden, welche parallel zur Siebachse 18 verlaufen und zwischen den Tragringen 10, 12 bzw. 12, 14 offen sind, d. h. über die Sieböffnungen 80 kommuniziert die Einlaßseite 20 mit der Auslaßseite 22 des Siebkorbs.

In den ersten Querschnittendbereichen 16A sind die Profilstäbe 16 an der Siebeinlaßseite 20 mit geneigten Flanken 82 und 84 sowie mit hinteren Flanken 86 und 88 versehen. Die geneigten Flanken 82 und 84 bilden mit der in Fig. 3 erkennbaren Ebene 40 spitze Winkel, die gleich groß oder unterschiedlich sein können, und die hinteren Flanken 86 und 88 liegen insbesondere vor Durchführung der erfindungsgemäßen Verformung gegen den ersten Rand 30' des Profilstabträgers 10' an.

Bei Sortierern, bei denen in bekannter Weise der Einlaßseite 20 des Siebkorbs benachbart ein Rotor in der zu sortierenden Fasersuspension umläuft, erzeugen die ersten Querschnittendbereiche 16A der Profilstäbe 16 insbesondere mit ihren geneigten Flanken 82 und 84 in der zu sortierenden Fasersuspension Mikroturbulenzen, welche der Ausbildung eines nennenswerten Faservlieses an der Siebeinlaßseite 20 und einer Verstopfung der Sieböffnungen 80 entgegenwirken.

Da in modernen Sortierern für die Aufbereitung von Fasersuspensionen feinste Sieböffnungen gefordert werden und mit hohen Stoffdichten (hoher Faseranteil der aufzubereitenden Fasersuspensionen) gearbeitet wird, ist es auch notwendig, mit dem oben erwähnten Rotor des Sortierers in der Fasersuspension hohe Druck- und Sogimpulse zu erzeugen, um einem Verstopfen der Sieböffnungen entgegenzuwirken. Diese hohen Druck- und Sogimpulse führen dazu, daß entsprechend hohe Kräfte auf die Profilstäbe einwirken, so daß diese unbedingt dauerhaft einen festen Halt in den Tragringen haben müssen. Diese Forderung läßt sich auf einfache Weise mit der vorliegenden Erfindung erfüllen, da durch die erfindungsgemäße Materialverdrängung die Profilstäbe fest in den Ausschnitten der Tragringe eingespannt werden, und zwar auch bei großen Siebkorbdurchmessern und infolgedessen entsprechend kleinen Biegungen beim Umformen der Profilstabträger in die Tragringe.

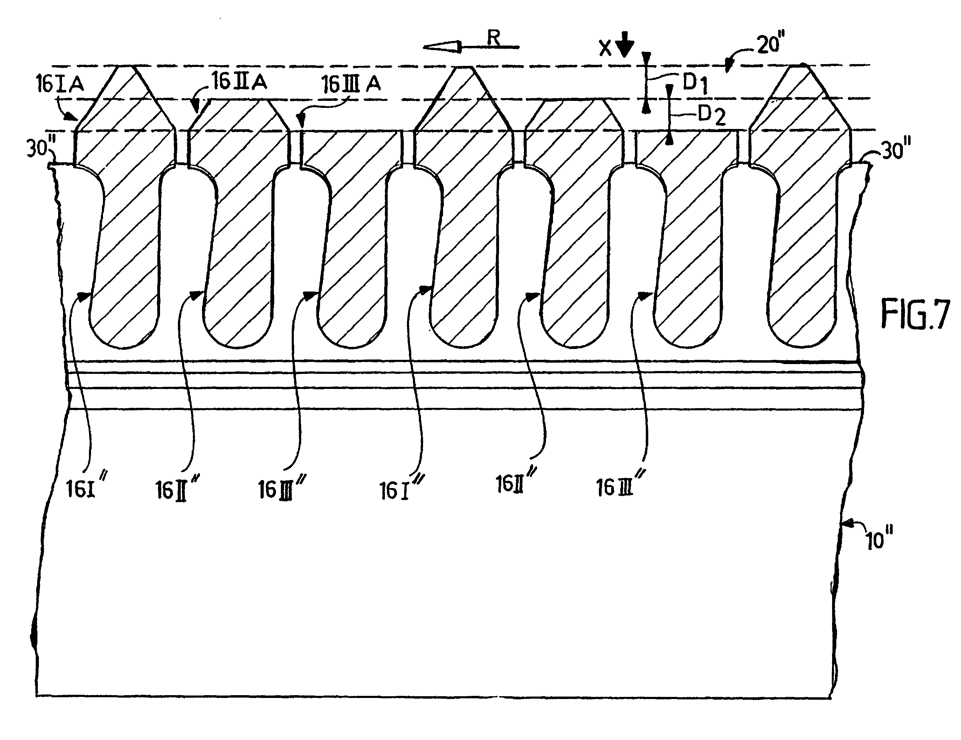

Die in den Figuren 7 bis 9 dargestellte zweite Ausführungsform unterscheidet sich von der ersten Ausführungsform nach den Figuren 1 bis 6 nur in der Gestaltung der von der Siebauslaßseite abgekehrten ersten Längsseiten der Profilstäbe, und zwar in der Gestaltung der ersten Querschnittendbereiche der Profilstäbe, mit denen die letzteren über diejenigen Ränder der Tragringe überstehen, welche der Siebeinlaßseite zugewandt sind. Deshalb wurden in den Figuren 7 bis 9, soweit möglich, dieselben Bezugszeichen verwendet wie in den Figuren 1 bis 6, jedoch unter Hinzufügung zweier Striche.

Die Darstellung in Fig. 7 soll zwar der Darstellung in Fig. 4 entsprechen, jedoch mit der Abwandlung, daß die Fig. 7 keinen noch geraden Profilstabträger zeigt, sondern die Abwicklung eines kreisringförmigen Tragrings, der infolgedessen in Fig. 7 als gerades Element dargestellt wurde.

Bei der zweiten Ausführungsform hält ein Tragring 10" eine Serie von Profilstäben 16I", 16II" und 16III", welche mit *ihren* ersten Querschnittendbereichen 16IA, 16IIA und 16IIIA über den der Siebeinlaßseite 20" zugewandten Rand 30" des Tragrings 10" überstehen (siehe Fig. 7).

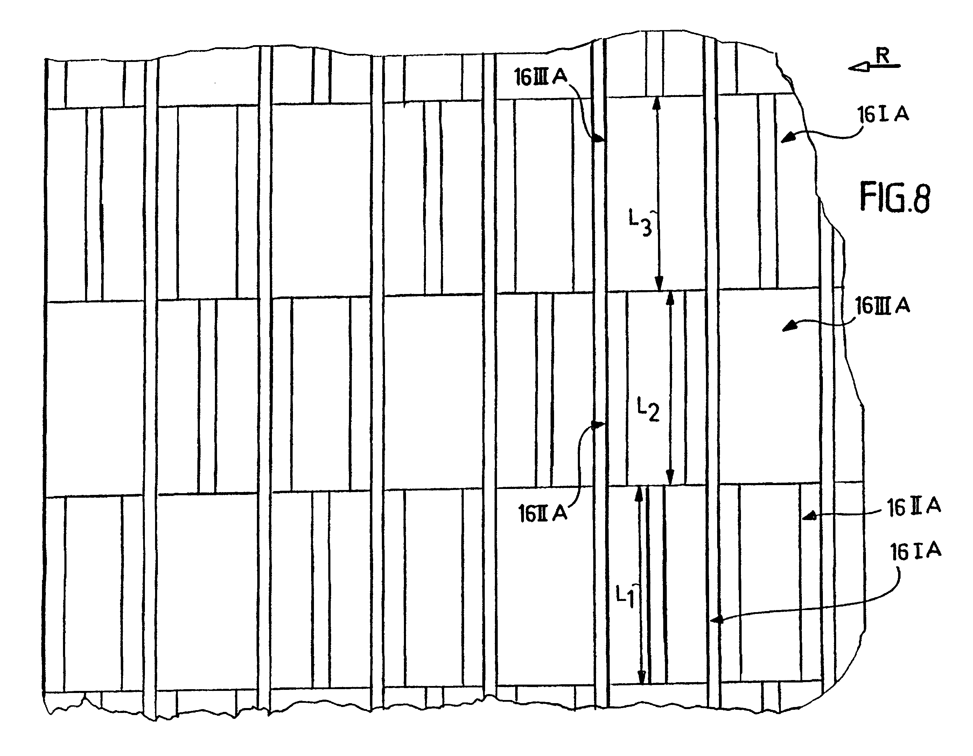

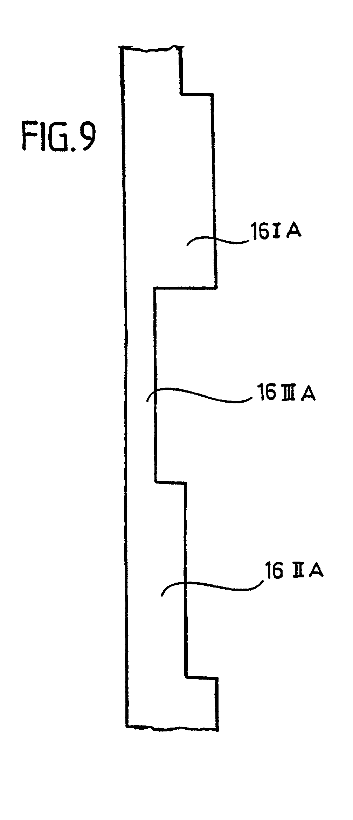

Wie sich aus den Figuren 8 und 9 ergibt, hat jeder der Profilstabe 16I", 16II" und 16III" eine sich in Stablängsrichtung periodisch wiederholende Serie von in Stablängsrichtung aufeinanderfolgenden Querschnittendbereichen 16IA, 16IIA und 16IIIA und damit eine sich in Stablängsrichtung periodisch wiederholende Serie von in Stablängsrichtung aufeinanderfolgenden Abschnitten unterschiedlichen Überstands. Die Profilstäbe 16I", 16II" und 16III" unterscheiden sich voneinander also im wesentlichen nur dadurch, daß die von den Querschnittendbereichen 16IA, 16IIA und 16IIIA gebildeten Serien von Profilstababschnitten in Stablängsrichtung gegeneinander versetzt sind.

Ferner hat bei der zweiten Ausführungsform das Sieb mehrere in Siebumfangsrichtung aufeinanderfolgende, identische Profilstabgruppen, wobei jede dieser Gruppen gebildet wird von drei Profilstäben, nämlich einem Profilstab 16I", einem Profilstab 16II" und einem Profilstab 16III", welche in der vorstehend aufgeführten Reihenfolge aufeinanderfolgen.

In die Figuren 7 und 8 wurde der Pfeil R eingezeichnet, welcher diejenige Richtung angeben soll, in der die zu sortierende Fasersuspension an der Einlaßseite 20" des Siebs entlangströmt, bei einem Sortierer mit Rotor gibt der Pfeil R aber auch die Rotordrehrichtung an, insbesondere also diejenige Richtung, in der Leisten oder sogenannte Reinigungsflügel des Rotors an der Einlaßseite 20" des Siebs vorbeilaufen. Bei der dargestellten Ausführungsform folgen in einem axialen Siebabschnitt in Richtung R die ersten Querschnittendbereiche also stets in der Reihenfolge 16IIIA, 16IIA und 16IA aufeinander.

Wie in Fig. 7 dargestellt, ragen die ersten Querschnittendbereiche 16IA, 16IIA und 16IIIA unterschiedlich weit in die zu sortierende Fasersuspension hinein, d. h. sie stehen unterschiedlich weit über die Innenränder 30" der Tragringe vor. Die Unterschiede in den überständen wurden in Fig. 7 mit D₁ und D₂ bezeichnet, wobei D₁ und D₂ unterschiedlich groß oder gleich groß sein können - ungefähr gleich große Werte von D₁ und D₂ werden dabei bevorzugt. Insbesondere bei Siebkörben für sogenannte Drucksortierer sind D₁ und D₂ höchstens gleich 1 mm, vorzugsweise 0,5 bis 0,8 mm und insbesondere ca. 0,5 bis ca. 0,6 mm. In Fig. 8 wurden die in Richtung der Siebachse bzw. in Profilstablängsrichtung gemessenen Längen der Querschnittendbereiche 16IA, 16IIA und 16IIIA mit L₁ bzw. L₂ bzw. L₃ bezeichnet; bei der dargestellten, bevorzugten Ausführungsform sind L₁, L₂ und L₃ gleich groß, was bedeuten soll, daß sich die Querschnitte der Querschnittendbereiche 16IA, 16IIA und 16IIIA über deren axiale Länge nicht ändern sollen, was jedoch ersichtlich nicht unbedingt der Fall sein muß. Bei einem Sieb mit ungefähr kreiszylindrischer Gestalt ist L₁ bzw. L₂ bzw. L₃ vorzugsweise ungefähr 15 % bis ungefähr 30 % der axialen Länge des Siebs, insbesondere gleich 1/5 bis 1/4 der Sieblänge. Bei einer axialen Sieblänge von beispielsweise 800 mm liegt L₁ bzw. L₂ bzw. L₃ also in einem Bereich von 150 bis 200 mm.

Wie die Fig. 8 erkennen läßt, sind auf der Einlaßseite 20" des erfindungsgemäßen Siebs die unterschiedlich hohen bzw. unterschiedlich weit vorspringenden Querschnittsendbereiche bzw. Profilstababschnitte 16IA, 16IIA und 16IIIA erfindungsgemäß nach einem besonderen Muster angeordnet dergestalt, daß eine in Fig. 8 in Richtung des Pfeils R an der Siebeinlaßseite vorbeiströmende, zu sortierende Fasersuspension eine axiale Strömungskomponente bzw. eine vergrößerte axiale Strömungskomponente in Richtung der Siebachse erhält, d. h. gemäß Fig. 8 nach unten abgelenkt wird, da einer Reihe von in Richtung R aufeinanderfolgender Profilstababschnitte 16IIIA, 16IIA und 16IA, deren Überstand in Richtung R zunimmt, in dem sich nach unten anschließenden axialen Siebabschnitt eine Reihe ebensolcher Profilstababschnitte benachbart ist, welche jedoch gegenüber der erstgenannten Reihe entgegen der Richtung R versetzt ist, und zwar und das Maß der sogenannten Teilung des Siebs, d. h. um den in Richtung R gemessenen Abstand der Längsmittelebenen zweier einander benachbarter Profilstäbe. Ein solcher Versatz wird bevorzugt, obwohl grundsätzlich auch ein doppelt so großer Versatz möglich wäre.

## Patentansprüche

1. Sieb für Fasersuspensionen mit einer bezüglich einer Siebachse (18) im wesentlichen rotationssymmetrischen Form, dessen eine, erste Umfangsseite eine Einlaßseite (20) und dessen andere, zweite Umfangsseite eine Auslaßseite (22) des Siebs für die Fasersuspension bildet, mit einer Serie von Profilstäben (16), welche sich quer zur Siebumfangsrichtung erstrecken, in Siebumfangsrichtung in gleichen Abständen voneinander angeordnet sind sowie zwischen sich schlitzförmige Sieböffnungen (80) bilden und deren Querschnitte jeweils eine längliche Form mit einem ersten, von der Siebauslaßseite abgekehrten Endbereich und einem zweiten, von der Siebeinlaßseite abgekehrten Endbereich besitzten, sowie mit wenigstens zwei in senkrecht zur Siebachse verlaufenden Ebenen liegenden und in Richtung der Siebachse im Abstand voneinander angeordneten Tragringen (10, 12, 14) aus plastisch verformbarem Material, von denen jeder in seinem der Siebeinlaßseite zugewandten ersten Randbereich eine Serie von der Siebeinlaßseite zu randoffenen Ausschnitten besitzt, deren Form - in Richtung der Siebachse gesehen - der Gestalt der in den Ausschnitten liegenden zweiten Querschnittendbereiche der Profilstäbe entspricht und in radialem Abstand von dem der Siebeinlaßseite zugekehrten, ersten Rand des Tragrings eine Hinterschneidung (34B) bildet, in welche ein Vorsprung des Profilstabquerschnitts eingreift, so daß die Profilstäbe mit ihren zweiten Querschnittendbereichen in bezüglich der Siebachse radialer Richtung sowie in Siebumfangsrichtung formschlüssig in den Tragringausschnitten gehalten sind, wobei die Profilstäbe in radialer Richtung über die ersten Ränder (30) der Tragringe überstehen und infolge einer plastischen Verformung der Tragringe mit ihren zweiten Querschnittendbereichen in den Tragringausschnitten eingespannt sind, **dadurch gekennzeichnet, daß** die Tragringe (10, 12, 14) auf der der Siebauslaßseite (22) zugewandten Seite der Profilstäbe (16) derart verformte Bereiche (70A, 70B, 72A, 72B) aufweisen, daß infolge einer Verdrängung von Tragringmaterial in Richtung auf die Siebeinlaßseite (20) die Profilstabvorsprünge (16C) in dieser Richtung gegen die Hinterschneidungen (34B) angepreßt sind.

2. Sieb nach Anspruch 1, **dadurch gekennzeichnet, daß** die verformten Tragringbereiche (70A, 70B, 72A, 72B) eingepreßte Vertiefungen (70A, 70B) aufweisen.

3. Sieb nach Anspruch 2, **dadurch gekennzeichnet, daß** die Vertiefungen die Gestalt von ringförmigen, um die Siebachse umlaufenden Rinnen (70A, 70B) besitzen.

4. Sieb nach Anspruch 2 oder 3, **dadurch gekennzeichnet, daß** die Vertiefungen (70A, 70B) auf den den axialen Enden des Siebs zugekehrten Seiten (24, 26) der Tragringe (10, 12, 14) liegen.

5. Sieb nach einem oder mehreren der vorstehenden Ansprüche, **dadurch gekennzeichnet, daß** die Tragringe (10, 12, 14) auf ihren beiden den axialen Siebenden zugekehrten Seiten (24, 26) mit verformten Bereichen (70A, 70B, 72A, 72B) versehen sind.

6. Sieb nach Anspruch 5, **dadurch gekennzeichnet, daß** - in Richtung der Siebachse (18) - die verformten Bereiche (70A, 72A bzw. 70B, 72B) eines Tragrings (10, 12, 14) einander gegenüberliegen.

7. Sieb nach einem oder mehreren der Ansprüche 3 bis 6, **dadurch gekennzeichnet, daß** die Rinnen (70A, 70B) gewalzte oder gerollte Bereiche sind.

8. Sieb nach einem oder mehreren der vorstehenden Ansprüche, **gekennzeichnet durch** metallische Profilstäbe (16).

9. Sieb nach einem oder mehreren der vorstehenden Ansprüche, **dadurch gekennzeichnet, daß** das Sieb zylindrisch ist.

10. Sieb nach einem oder mehreren der vorstehenden Ansprüche, **dadurch gekennzeichnet, daß** die Innenumfangsseite des Siebs dessen Einlaßseite (20) bildet.

11. Sieb nach einem oder mehreren der vorstehenden Ansprüche, **dadurch gekennzeichnet, daß** alle Profilstäbe (16) dieselbe Querschnittsform und alle Tragringausschnitte (34) dieselbe Gestalt besitzen.

12. Sieb nach einem oder mehreren der vorstehenden Ansprüche, **dadurch gekennzeichnet, daß** die ersten Querschnittsendbereiche (16A) der Profilstäbe (16) derart gestaltet sind, daß sie in einer an der Siebeinlaßseite (20) umlaufenden Fasersuspension Mikroturbulenzen erzeugen.

13. Sieb nach Anspruch 12, **dadurch gekennzeichnet, daß** die ersten Querschnittsendbereiche (16A) der Profilstäbe (16) gegenüber einer Durchmesserebene (40) des Siebs geneigte Flanken (82, 84) aufweisen, welche die Katheten eines zumindest ungefähr gleichschenkligen Dreiecks bilden, dessen Winkelhalbierende mindestens ungefähr in der besagten Durchmesserebene (40) liegt.

14. Sieb nach einem oder mehreren der vorstehenden Ansprüche, **dadurch gekennzeichnet, daß** - in Richtung der Siebachse (18) gesehen - die Hinterschneidung (34B) der Tragringausschnitte (34) auf der der Siebauslaßseite (22) zugekehrten Seite der von der Hinterschneidung (34B) gebildeten Engstelle (34A) des Tragringausschnitts (34) eine Flanke (34C) bildet, welche gegenüber einer durch diese Engstelle hindurch verlaufenden Durchmesserebene (40) des Siebs um einen solchen spitzen, sich der Siebauslaßseite (22) zu öffnenden Winkel (α) geneigt ist, daß zwischen dieser Flanke (34C) und einer gegen letztere angepreßten Flanke des Profilstabvorsprungs (16C) Selbsthemmung gegeben ist.

15. Sieb nach einem oder mehreren der vorstehenden Ansprüche, **dadurch gekennzeichnet, daß** der zweite Endbereich (16B) des Profilstabquerschnitts ungefähr keulenförmig gestaltet ist.

16. Sieb nach einem oder mehreren der vorstehenden Ansprüche, **dadurch gekennzeichnet, daß** der erste Endbereich (16A) des Profilstabquerschnitts ungefähr pilzkopfförmig gestaltet ist mit der Siebauslaßseite (22) zugekehrten Flanken (86, 88), welche mit dem ersten Rand (30) des betreffenden Tragrings (10, 12, 14) zusammenwirkende Anschläge bilden.

17. Sieb nach einem oder mehreren der vorstehenden Ansprüche, **dadurch gekennzeichnet, daß** die Tragringe (10, 12, 14) aus einem anderen Werkstoff bestehen als die Profilstäbe (16).

18. Sieb nach Anspruch 17, **dadurch gekennzeichnet, daß** der Werkstoff der Profilstäbe (16) eine andere Festigkeit aufweist als der Tragringwerkstoff.

19. Sieb nach Anspruch 18, **dadurch gekennzeichnet, daß** die Festigkeit des Profilstabwerkstoffs höher ist als die Festigkeit des Tragringwerkstoffs.

20. Sieb nach einem der Ansprüche 1 bis 19, **dadurch gekennzeichnet, daß** in Siebumfangsrichtung (R) hintereinander angeordnete Profilstäbe (16I", 16II", 16III") an ihren von der Siebauslaßseite abgekehrten ersten Längsseiten derart unterschiedlich ausgebildet sind, daß die Profilstäbe einer an der Siebeinlaßseite (20") in Siebumfangsrichtung strömenden Fasersuspension eine in Richtung der Siebachse gerichtete axiale Strömungskomponente verleihen.

21. Sieb nach Anspruch 20, **dadurch gekennzeichnet, daß** in Siebumfangsrichtung (R) jeweils unmittelbar aufeinanderfolgende Profilstäbe (16I", 16II", 16III") an ihren ersten Längsseiten mindestens in einem axialen Abschnitt des Siebs derart unterschiedlich ausgebildet sind, daß die Profilstäbe einer an der Siebeinlaßseite (20") in Siebumfangsrichtung strömenden Fasersuspension eine in Richtung der Siebachse gerichtete axiale Strömungskomponente verleihen.

22. Sieb nach Anspruch 20 oder 21, **dadurch gekennzeichnet, daß** in Siebumfangsrichtung (R) mehrere identische Gruppen von Profilstäben (16I", 16II", 16III") aufeinanderfolgen, wobei sich die Profilstäbe einer Gruppe in der Ausbildung ihrer ersten Längsseiten voneinander unterscheiden.

23. Sieb nach einem oder mehreren der Ansprüche 20 bis 22, **dadurch gekennzeichnet, daß** die Profilstäbe (16I", 16II", 16III") an ihren ersten Längsseiten abschnittsweise unterschiedlich weit über die ersten Tragringränder (30") überstehen.

24. Sieb nach Anspruch 23, **dadurch gekennzeichnet, daß** jeder Profilstab (16I", 16II", 16III") eine sich in Stablängsrichtung periodisch wiederholende Serle von in Stablängsrichtung aufeinanderfolgenden Abschnitten (16IA, 16IIIA, 16IIA) unterschiedlichen Überstands aufweist.

25. Sieb nach Anspruch 24, **dadurch gekennzeichnet, daß** die Serie von Profilstababschnitten (16IA, 16IIIA, 16IIA) bei jedem Profilstab dieselbe Anzahl von Profilstababschnitten umfaßt und die Überstände gleichartiger Profilstababschnitte identisch sind.

26. Sieb nach Anspruch 25, **dadurch gekennzeichnet, daß** die in Stablängsrichtung gemessene Länge aller Profilstababschnitte (16IA, 16IIIA, 16IIA) identisch ist.

27. Sieb nach den Ansprüchen 25 und 26, **dadurch gekennzeichnet, daß** In axialen Siebabschnitten, deren axiale Länge gleich derjenigen der Profilstababschnitte (16IA, 16IIIA, 16IIA) ist, in Siebumfangsrichtung (R) ungleichartige Profilstababschnitte aufeinanderfolgen.

28. Sieb nach Anspruch 27, **dadurch gekennzeichnet, daß** in jedem axialen Siebabschnitt die Profilstababschnitte (16IA, 16IIIA, 16IIA) gegenüber gleichartigen Profilstababschnitten benachbarter axialer Siebabschnitte in Siebumfangsrichtung (R) derart versetzt angeordnet sind, daß die Profilstababschnitte einer an der Siebeinlaßseite (20") in Siebumfangsrichtung strömenden Fasersuspension eine in Richtung der Siebachse gerichtete axiale Strömungskomponente verleihen.

29. Verfahren zur Herstellung eines Siebs für Fasersuspensionen mit einer bezüglich einer Siebachse im wesentlichen rotationssymmetrischen Form, dessen eine, erste Umfangsseite eine Einlaßseite und dessen andere, zweite Umfangsseite eine Auslaßseite des Siebs für die Fasersuspension bildet, mit einer Serie von Profilstäben, welche sich quer zur Siebumfangsrichtung erstrecken, in Siebumfangsrichtung in gleichen Abständen voneinander angeordnet sind sowie zwischen sich schlitzförmige Sieböffnungen bilden und deren Querschnitte jeweils eine längliche Form mit einem ersten, von der Siebauslaßseite abgekehrten Endbereich und einem zweiten, von der Siebeinlaßseite abgekehrten Endbereich besitzen, sowie mit wenigstens zwei in senkrecht zur Siebachse verlaufenden Ebenen liegenden und in Richtung der Siebachse im Abstand voneinander angeordneten ringförmigen Profilstabträgern aus plastisch verformbarem Material, von denen jeder in seinem der Siebeinlaßseite zugewandten ersten Randbereich eine Serie von der Siebeinlaßseite zu randoffenen Ausschnitten besitzt, deren Form - in Richtung der Siebachse gesehen - der Gestalt der in den Ausschnitten liegenden zweiten Querschnittendbereiche der Profilstäbe entspricht und in radialem Abstand von dem der Siebeinlaßseite zugekehrten, ersten Rand des Profilstabträgers eine Hinterschneidung bildet, in welche ein Vorsprung des Profilstabquerschnitts eingreift, so daß die Profilstäbe mit ihren zweiten Querschnittendbereichen in bezüglich der Siebachse radialer Richtung sowie in Siebumfangsrichtung formschlüssig in den Ausschnitten der Profilstabträger gehalten sind sowie mit ihren ersten Querschnittendbereichen in radialer Richtung über die ersten Ränder der Profilstabträger überstehen, wobei die Profilstabträger zunächst mit Ausschnitten versehen werden, welche etwas größer sind als die zweiten Querschnittendbereiche der Profilstäbe, worauf die Profilstäbe in die Profilstabträgerausschnitte eingesetzt und sodann durch eine plastische Verformung der Profilstabträger in deren Ausschnitten eingespannt werden, **dadurch gekennzeichnet, daß** die Profilstabträger auf der von ihren ersten Rändern abgewandten Seite der Profilstäbe derart plastisch verformt werden, daß infolge einer Verdrängung von Profilstabträgermaterial in Richtung auf die ersten Profilstabträgerränder die Profilstabvorsprünge in dieser Richtung gegen die Hinterschneidungen angepreßt werden.

30. Verfahren nach Anspruch 29, **dadurch gekennzeichnet, daß** die Profilstabträger erst nach dem Einsetzen der Profilstäbe in die Profilstabträgerausschnitte zu geschlossenen Ringen gebogen werden.

31. Verfahren nach Anspruch 29 oder 30, **dadurch gekennzeichnet, daß** die die Materialverdrängung bewirkende plastische Verformung der Profilstabträger an den ringförmigen Profilstabträgern vorgenommen wird.

32. Verfahren nach einem oder mehreren der Ansprüche 29 bis 31, **dadurch gekennzeichnet, daß** die plastische Verformung mittels eines Druckwerkzeugs vorgenommen wird.

33. Verfahren nach Anspruch 32, **dadurch gekennzeichnet, daß** zu der die Materialverdrängung bewirkenden plastischen Verformung eines Profilstabträgers dieser zwischen einer Druckrolle und einem Widerlager eingespannt sowie Druckrolle samt Widerlager und der Profilstabträger in Längsrichtung des letzteren so relativ zueinander bewegt werden, daß die Druckrolle alle Profilstäbe der Profilstabserie passiert.

34. Verfahren nach Anspruch 33, **dadurch gekennzeichnet, daß** auch als Widerlager eine Druckrolle verwendet wird.

35. Verfahren nach Anspruch 33 oder 34, **dadurch gekennzeichnet, daß** eine Druckrolle mit einem rippenförmigen Umfangsprofil verwendet wird.

36. Verfahren nach einem oder mehreren der Ansprüche 29 bis 35, **dadurch gekennzeichnet, daß** durch die plastische Verformung in einer quer zur Profilstablängsrichtung verlaufenden Fläche des Profilstabträgers eine sich der ganzen Profilstabserie entlang erstreckende Rinne erzeugt wird.

37. Verfahren nach Anspruch 36, **dadurch gekennzeichnet, daß** die Rinne so nahe bei den Profilstäben erzeugt wird, daß dabei verdrängtes Trägermaterial eine gegen die Profilstäbe anliegende Wulst bildet.

## Claims

1. Screen for fibre suspensions having a shape which is essentially rotationally symmetrical in relation to a screen axis (18), a first circumferential side of said screen forming an inlet side (20) and the other, second circumferential side thereof forming an outlet side (22) of said screen for the fibre suspension, with a series of profiled bars (16) extending transversely to the circumferential direction of the screen, said profiled bars being arranged at equal spacings from one another in the circumferential direction of the screen and forming slot-shaped screen openings (80) between them, the cross sections of said profiled bars each having an elongate shape with a first end region facing away from the screen outlet side and a second end region facing away from the screen inlet side, and with at least two supporting rings (10, 12, 14) made of plastically deformable material, said supporting rings lying in planes extending perpendicularly to said screen axis and being arranged in spaced relation to one another in the direction of said screen axis, each of said supporting rings having in its first edge region facing said screen inlet side a series of cut-outs open at their edge towards said screen inlet side, the shape of said cut-outs - viewed in the direction of said screen axis - corresponding to the configuration of the second cross-sectional end regions of said profiled bars lying in said cut-outs, and forming at a radial spacing from the first edge of said supporting ring facing said screen inlet side an undercut (34B) in which a projection of said profiled bar cross section engages so that said profiled bars are held positively in a radial direction in relation to said screen axis and in the circumferential direction of said screen with their second cross-sectional end regions in said supporting ring cut-outs, said profiled bars projecting in a radial direction over the first edges (30) of said supporting rings, and being clamped with their second cross-sectional end regions in said supporting ring cut-outs as a result of a plastic deformation of said supporting rings, **characterized in that** said supporting rings (10, 12, 14) have on the side of said profiled bars (16) facing said screen outlet side (22) such deformed regions (70A, 70B, 72A, 72B) that as a result of a displacement of supporting ring material in the direction towards said screen inlet side (20) said profiled bar projections (16C) are pressed in this direction against said undercuts (34B).

2. Screen as defined in claim 1, **characterized in that** said deformed supporting ring regions (70A, 70B, 72A, 72B) comprise pressed-in recesses (70A, 70B).

3. Screen as defined in claim 2, **characterized in that** said recesses are in the form of ring-shaped grooves (70A, 70B) extending around said screen axis.

4. Screen as defined in claim 2 or 3, **characterized in that** said recesses (70A, 70B) lie on the sides (24, 26) of said supporting rings (10, 12, 14) facing the axial ends of said screen.

5. Screen as defined in any one or several of the preceding claims, **characterized in that** said supporting rings (10, 12, 14) are provided with deformed regions (70A, 70B, 72A, 72B) on both of their sides (24, 26) facing said axial screen ends.

6. Screen as defined in claim 5, **characterized in that** - in the direction of said screen axis (18) - said deformed regions (70A, 72A and 70B, 72B, respectively) of a supporting ring (10, 12, 14) lie opposite each other.

7. Screen as defined in any one or several of claims 3 to 6, **characterized in that** said grooves (70A, 70B) are rolled regions.

8. Screen as defined in any one or several of the preceding claims, **characterized by** metallic profiled bars (16).

9. Screen as defined in any one or several of the preceding claims, **characterized in that** said screen is cylindrical.

10. Screen as defined in any one or several of the preceding claims, **characterized in that** the inner circumferential side of said screen forms the inlet side (20) thereof.

11. Screen as defined in any one or several of the preceding claims, **characterized in that** all profiled bars (16) have the same cross-sectional shape and all supporting ring cut-outs (34) the same configuration.

12. Screen as defined in any one or several of the preceding claims, **characterized in that** the first cross-sectional end regions (16A) of said profiled bars (16) are of such configuration that they generate microturbulences in a fibre suspension rotating at said screen inlet side (20).

13. Screen as defined in claim 12, **characterized in that** the first cross-sectional end regions (16A) of said profiled bars (16) have flanks (82, 84) inclined in relation to a diameter plane (40) of said screen, said flanks forming the legs of an at least approximate isosceles triangle whose angle bisector lies at least approximately in said diameter plane (40).

14. Screen as defined in any one or several of the preceding claims, **characterized in that** - viewed in the direction of said screen axis (18) - said undercut (34B) of said supporting ring cut-outs (34) forms a flank (34C) on that side of the supporting ring cut-out constriction (34A) formed by said undercut (34B) which faces said screen outlet side (22), said flank (34C) being inclined in relation to a diameter plane (40) of said screen running through this constriction at such an acute angle (α) opening towards said screen outlet side (22) that self-locking occurs between this flank (34C) and a flank of said profiled bar projection (16C) pressed against said flank (34C).

15. Screen as defined in any one or several of the preceding claims, **characterized in that** the second end region (16B) of the profiled bar cross section is of approximately club-shaped configuration.

16. Screen as defined in any one or several of the preceding claims, **characterized In that** the first end region (16A) of the profiled bar cross section is of approximately mushroom-head-shaped configuration with flanks (86,88) facing said screen outlet side (22) and forming cooperating stops with the first edge (30) of the pertinent supporting ring (10, 12, 14).

17. Screen as defined in any one or several of the preceding claims, **characterized in that** said supporting rings (10, 12, 14) consist of a material which is different from that of said profiled bars (16).

18. Screen as defined in claim 17, **characterized in that** the material of said profiled bars (16) has a different stability than that of the material of said supporting rings.

19. Screen as defined in claim 18, **characterized in that** the stability of said profiled bar material is greater than the stability of said supporting ring material.

20. Screen as defined in any one of claims 1 to 19, **characterized in that** profiled bars (16I", 16II", 16III") arranged behind one another in the circumferential direction (R) of the screen are of such different configuration at their first longitudinal sides facing away from said screen outlet side that said profiled bars impart an axial flow component oriented in the direction of said screen axis to a fibre suspension flowing at said screen inlet side (20") in the circumferential direction of the screen.

21. Screen as defined in claim 20, **characterized in that** profiled bars (16I", 16II", 16III") arranged so as to follow one another immediately in the circumferential direction (R) of the screen are of such different configuration at their first longitudinal sides at least in one axial section of said screen that said profiled bars impart an axial flow component oriented in the direction of said screen axis to a fibre suspension flowing at said screen inlet side (20") in the circumferential direction of the screen.

22. Screen as defined in claim 20 or 21, **characterized in that** several identical groups of profiled bars (16I", 16II", 16III") follow one another in the circumferential direction (R) of the screen, and the profiled bars of a group differ from one another with respect to the configuration of their first longitudinal sides.

23. Screen as defined in any one or several of claims 20 to 22, **characterized in that** said profiled bars (16I", 16II", 16III") project at their first longitudinal sides section-wise to a varying extent over the first supporting ring edges (30").

24. Screen as defined in claim 23, **characterized in that** each profiled bar (16I", 16II", 16III") has in the longitudinal direction of the bar a periodically repeated series of sections (16IA, 16IIIA, 16IIA) of varying projection following one another in the longitudinal direction of the bar.

25. Screen as defined in claim 24, **characterized in that** the series of profiled bar sections (16IA, 16IIIA, 16IIA) contains the same number of profiled bar sections on each profiled bar, and the projections of profiled bar sections of the same kind are identical.

26. Screen as defined in claim 25, **characterized in that** the length of all profiled bar sections (16IA, 16IIIA, 16IIA) measured in the longitudinal direction of the bar is identical.

27. Screen as defined in claims 25 and 26, **characterized in that** in axial screen sections whose axial length is the same as that of the profiled bar sections (16IA, 16IIIA, 16IIA), different profiled bar sections follow one another in the circumferential direction (R) of the screen.

28. Screen as defined in claim 27, **characterized in that** in each axial screen section, the profiled bar sections (16IA, 16IIIA, 16IIA) are offset in the circumferential direction (R) of the screen in relation to identical profiled bar sections of adjacent axial screen sections such that the profiled bar sections impart an axial flow component oriented in the direction of the screen axis to a fibre suspension flowing at the inlet side (20") of the screen in the circumferential direction of the screen.

29. Method for the manufacture of a screen for fibre suspensions having a shape which is essentially rotationally symmetrical in relation to a screen axis, a first circumferential side of said screen forming an inlet side and the other, second circumferential side thereof forming an outlet side of said screen for the fibre suspension, with a series of profiled bars extending transversely to the circumferential direction of the screen, said profiled bars being arranged at equal spacings from one another in the circumferential direction of the screen and forming slot-shaped screen openings between them, the cross sections of said profiled bars each having an elongate shape with a first end region facing away from the screen outlet side and a second end region facing away from the screen inlet side, and with at least two ring-shaped profiled bar supports made of plastically deformable material, said profiled bar supports lying in planes extending perpendicularly to said screen axis and being arranged in spaced relation to one another in the direction of said screen axis, each of said profiled bar supports having in its first edge region facing said screen inlet side a series of cut-outs open at their edge towards said screen inlet side, the shape of said cut-outs - viewed in the direction of said screen axis - corresponding to the configuration of the second cross-sectional end regions of said profiled bars lying in said cut-outs, and forming at a radial spacing from the first edge of said profiled bar support facing said screen inlet side an undercut in which a projection of the profiled bar cross section engages so that said profiled bars are held positively in a radial direction in relation to said screen axis and in the circumferential direction of the screen with their second cross-sectional end regions in said cut-outs of said profiled bar supports and project with their first cross-sectional end regions in a radial direction over the first edges of said profiled bar supports, wherein said profiled bar supports are first provided with cut-outs which are somewhat larger than the second cross-sectional end regions of said profiled bars and said profiled bars are then inserted into said profiled bar support cut-outs and clamped by a plastic deformation of said profiled bar supports in their cut-outs, **characterized in that** said profiled bar supports are made to undergo plastic deformation on that side of said profiled bars which faces away from the first edges of said profiled bar supports such that as a result of a displacement of profiled bar support material in the direction towards the first profiled bar support edges, the profiled bar projections are pressed in this direction against the undercuts.

30. Method as defined in claim 29, **characterized in that** said profiled bar supports are only bent into closed rings after said profiled bars have been inserted in said profiled bar support cut-outs.

31. Method as defined in claim 29 or 30, **characterized in that** the plastic deformation of said profiled bar supports causing the displacement of material is carried out on the ring-shaped profiled bar supports.

32. Method as defined in any one or several of claims 29 to 31, **characterized in that** the plastic deformation is carried out using a pressure tool.

33. Method as defined in claim 32, **characterized in that** for the plastic deformation of a profiled bar support which brings about the displacement of material, said profiled bar support is clamped between a pressure roll and an abutment, and said pressure roll together with said abutment and said profiled bar support are moved relative to one another in the longitudinal direction of said profiled bar support such that said pressure roll passes all profiled bars of the series of profiled bars.

34. Method as defined in claim 33, **characterized in that** a pressure roll is also used as abutment.

35. Method as defined in claim 33 or 34, **characterized in that** a pressure roll with a rib-shaped circumferential profile is used.

36. Method as defined in any one or several of claims 29 to 35, **characterized in that** a groove extending along the entire series of profiled bars is produced by the plastic deformation in a surface of said profiled bar support extending transversely to the longitudinal direction of said profiled bars.

37. Method as defined in claim 36, **characterized in that** said groove is produced so close to said profiled bars that thus displaced support material forms a bead abutting against said profiled bars.

## Revendications

1. Tamis pour suspensions de fibres présentant une forme sensiblement à symétrie de rotation par rapport à un axe de tamis (18), dont une première face périphérique forme une face d'entrée (20) et dont l'autre, la seconde face périphérique forme une face de sortie (22) du tamis pour les suspensions de fibres, le tamis comprenant une série de barres profilées (16) qui s'étendent transversalement par rapport à la direction périphérique du tamis, sont disposées de manière à être équidistantes les unes des autres dans la direction périphérique en formant entre-elles des ouvertures de tamis (80) en forme de fente, et dont les sections transversales présentent chacune une forme allongée avec une première zone d'extrémité éloignée de la face de sortie du tamis et une seconde zone d'extrémité éloignée de la face d'entrée du tamis, le tamis comprenant par ailleurs au moins deux anneaux de support (10, 12, 14) en un matériau déformable de manière plastique, qui se trouvent dans des plans s'étendant perpendiculairement à l'axe de tamis et disposés à distance les uns des autres, suivant l'axe du tamis et dont chacun possède dans sa première zone de bord dirigée vers la face d'entrée du tamis, une série d'encoches ouvertes dans la direction de la face d'entrée du tamis vers le bord, dont la forme - vu dans la direction de l'axe du tamis - correspond à la configuration des secondes zones d'extrémité de section transversale des barres profilées, logées dans les encoches, et réalise, à distance radiale du premier bord de l'anneau de support dirigé vers la face d'entrée du tamis, une contre-dépouille (34B) dans laquelle s'engage une protubérance de la section transversale de la barre profilée, de sorte que les barres profilées, avec leurs secondes zones d'extrémité de section transversale, dans la direction radiale par rapport à l'axe de tamis ainsi que dans la direction périphérique du tamis, sont maintenues par complémentarité de forme dans les encoches des anneaux de support, les barres profilées faisant saillie dans la direction radiale, au-delà des premiers bords (30) des anneaux de support, et étant enserrées, avec leurs secondes zones d'extrémité de section transversale, dans les encoches des anneaux de support, suite à une déformation plastique des anneaux de support,
**caractérisé en ce que** les anneaux de support (10, 12, 14), sur le côté des barres profilées (16), dirigé vers la face de sortie (22) du tamis, présentent des zones (70A, 70B, 72A, 72B) déformées de manière telle, que suite à un refoulement de matériau de l'anneau de support en direction de la face d'entrée (20) du tamis, les protubérances (16C) des barres profilées sont pressées, dans cette direction, contre les contre-dépouilles (34B).

2. Tamis selon la revendication 1, **caractérisé en ce que** les zones d'anneau de support déformées (70A, 70B, 72A, 72B) présentent des creux (70A, 70B) réalisés par compression.

3. Tamis selon la revendication 2, **caractérisé en ce que** les creux possèdent une configuration en rainures (70A, 70B) de forme annulaire, s'étendant périphériquement autour de l'axe de tamis.

4. Tamis selon la revendication 2 ou 3, **caractérisé en ce que** les creux (70A, 70B) se situent sur les côtés (24, 26) des anneaux de support (10, 12, 14), qui sont dirigés vers les extrémités axiales du tamis.

5. Tamis selon l'une ou plusieurs des revendications précédentes, **caractérisé en ce que** les anneaux de support (10, 12, 14) sont pourvus, sur leurs deux côtés (24, 26) dirigés vers les extrémités axiales du tamis, de zones déformées (70A, 70B, 72A, 72B).

6. Tamis selon la revendication 5, **caractérisé en ce que**, dans la direction de l'axe de tamis (18), les zones déformées (70A, 72A et respectivement 70B, 72B) d'un anneau de support (10, 12, 14) sont mutuellement opposées.

7. Tamis selon l'une ou plusieurs des revendications 3 à 6, **caractérisé en ce que** les rainures (70A, 70B) sont des zones formées par galetage ou roulage.

8. Tamis selon l'une ou plusieurs des revendications précédentes, **caractérisé par** des barres profilées (16) métalliques.

9. Tamis selon l'une ou plusieurs des revendications précédentes, **caractérisé en ce que** le tamis est cylindrique.

10. Tamis selon l'une ou plusieurs des revendications précédentes, **caractérisé en ce que** la face périphérique intérieure du tamis constitue sa face d'entrée (20).

11. Tamis selon l'une ou plusieurs des revendications précédentes, **caractérisé en ce que** toutes les barres profilées (16) possèdent la même forme de section transversale et toutes les encoches (34) des anneaux de support possèdent la même configuration.

12. Tamis selon l'une ou plusieurs des revendications précédentes, **caractérisé en ce que** les premières zones d'extrémité de section transversale (16A) des barres profilées (16) sont d'une configuration telle, qu'elles engendrent des micro-turbulences dans une suspension de fibres en révolution sur la face d'entrée (20) du tamis.

13. Tamis selon la revendication 12, **caractérisé en ce que** les premières zones d'extrémité de section transversale (16A) des barres profilées (16) présentent des flancs (82, 84) qui sont inclinés par rapport à un plan diamétral (40) du tamis, et forment les côtés du sommet d'un triangle au moins approximativement isocèle dont la bissectrice de l'angle au sommet se situe au moins approximativement dans ledit plan diamétral (40).

14. Tamis selon l'une ou plusieurs des revendications précédentes, **caractérisé en ce que**, vu dans la direction de l'axe de tamis (18), la contre-dépouille (34B) des encoches (34) des anneaux de support, sur le côté de la zone étroite (34A) de l'encoche (34) de l'anneau de support, formée par la contre-dépouille (34B), dirigé vers la face de sortie (22) du tamis, forme un flanc (34C) qui est incliné par rapport à un plan diamétral (40) du tamis passant par ladite zone étroite, d'un angle aigu (α) s'ouvrant en direction de la face de sortie (22) du tamis, de façon telle qu'il s'établisse un blocage automatique entre ce flanc (34C) et un flanc de la protubérance (16C) de la barre profilée, pressé contre le précédent.

15. Tamis selon l'une ou plusieurs des revendications précédentes, **caractérisé en ce que** la seconde zone d'extrémité (16B) de la section transversale de la barre profilée, est d'une configuration sensiblement en forme de lobe.

16. Tamis selon l'une ou plusieurs des revendications précédentes, **caractérisé en ce que** la première zone d'extrémité (16A) de la section transversale de la barre profilée est d'une configuration sensiblement en forme de chapeau de champignon avec des flancs (86, 88) dirigés vers la face de sortie (22) du tamis et formant des butées coopérant avec le premier bord (30) de l'anneau de support (10, 12, 14) considéré.

17. Tamis selon l'une ou plusieurs des revendications précédentes, **caractérisé en ce que** les anneaux de support (10, 12, 14) sont réalisés en un autre matériau que les barres profilées (16).

18. Tamis selon la revendication 17, **caractérisé en ce que** le matériau des barres profilées (16) présente une résistance différente de celle du matériau des anneaux de support.

19. Tamis selon la revendication 18, **caractérisé en ce que** la résistance du matériau des barres profilées est supérieure à la résistance du matériau des anneaux de support.

20. Tamis selon l'une des revendications 1 à 19, **caractérisé en ce que** des barres profilées (16I'', 16II'', 16III'') disposées les unes derrière les autres dans la direction périphérique (R) du tamis, sont d'une configuration différente sur leurs premiers côtés longitudinaux éloignés de la face de sortie du tamis, de façon à ce que les barres profilées confèrent à une suspension de fibres s'écoulant dans la direction périphérique du tamis sur la face d'entrée (20"), une composante d'écoulement, axiale, dirigée dans la direction de l'axe du tamis.

21. Tamis selon la revendication 20, **caractérisé en ce que** des barres profilées (16I'', 16II", 16III") se succédant respectivement directement dans la direction périphérique (R) du tamis, sont d'une configuration différente sur leurs premiers côtés longitudinaux, au moins sur un tronçon axial du tamis, de façon à ce que les barres profilées confèrent à une suspension de fibres s'écoulant dans la direction périphérique du tamis sur la face d'entrée (20''), une composante d'écoulement, axiale, dirigée dans la direction de l'axe du tamis.

22. Tamis selon la revendication 20 ou 21, **caractérisé en ce que** dans la direction périphérique (R) du tamis se succèdent plusieurs groupes identiques de barres profilées (16I'', 16II'', 16III"), les barres profilées d'un groupe se distinguant les unes des autres quant à la configuration de leurs premiers côtés longitudinaux.

23. Tamis selon l'une ou plusieurs des revendications 20 à 22, **caractérisé en ce que** les barres profilées (16I'', 16II" , 16III''), sur leurs premiers côtés longitudinaux, font saillie d'une valeur différente par tronçons, au-delà des premiers bords (30'') des anneaux de support.

24. Tamis selon la revendication 23, **caractérisé en ce que** chaque barre profilée (16I'', 16II'', 16III'') présente une série de tronçons (16IA, 16IIA, 16IIIA) de saillies différentes se succédant dans la direction longitudinale de la barre, série qui se répète périodiquement dans la direction longitudinale de la barre.

25. Tamis selon la revendication 24, **caractérisé en ce que** la série de tronçons de barre profilée (16IA, 16IIA, 16IIIA) comprend pour chaque barre profilée, le même nombre de tronçons de barre profilée, et les saillies de tronçons de barre profilée de même type sont identiques.

26. Tamis selon la revendication 25, **caractérisé en ce que** la longueur de tous les tronçons de barre profilée (16IA, 16IIA, 16IIIA), mesurée dans la direction longitudinale de la barre, est identique.

27. Tamis selon les revendications 25 et 26, **caractérisé en ce que** dans des sections axiales de tamis, dont la longueur axiale est égale à celle des tronçons de barre profilée (16IA, 16IIA, 16IIIA), dans la direction périphérique (R) du tamis, se succèdent des tronçons de barre profilée de type non identique.

28. Tamis selon la revendication 27, **caractérisé en ce que** dans chaque section axiale de tamis, les tronçons de barre profilée (16IA, 16IIA, 16IIIA) sont disposés de manière décalée dans la direction périphérique (R) du tamis, par rapport à des tronçons de barre profilée de même type de sections axiales de tamis voisines, de façon telle que les tronçons de barre profilée confèrent à une suspension de fibres s'écoulant dans la direction périphérique du tamis sur la face d'entrée (20''), une composante d'écoulement, axiale, dirigée dans la direction de l'axe du tamis.

29. Procédé de fabrication d'un tamis pour suspensions de fibres présentant une forme sensiblement à symétrie de rotation par rapport à un axe de tamis, dont une première face périphérique forme une face d'entrée, et dont l'autre, la seconde face périphérique forme une face de sortie du tamis pour les suspensions de fibres, le tamis comprenant une série de barres profilées qui s'étendent transversalement par rapport à la direction périphérique du tamis, sont disposées de manière à être équidistantes les unes des autres dans la direction périphérique en formant entre-elles des ouvertures de tamis en forme de fente, et dont les sections transversales présentent chacune une forme allongée avec une première zone d'extrémité éloignée de la face de sortie du tamis et une seconde zone d'extrémité éloignée de la face d'entrée du tamis, le tamis comprenant par ailleurs au moins deux supports de barres profilées en forme d'anneau en un matériau déformable de manière plastique, qui se trouvent dans des plans s'étendant perpendiculairement à l'axe de tamis et disposés à distance les uns des autres suivant l'axe du tamis, et dont chacun possède dans sa première zone de bord dirigée vers la face d'entrée du tamis, une série d'encoches ouvertes dans la direction de la face d'entrée du tamis vers le bord, dont la forme - vu dans la direction de l'axe du tamis - correspond à la configuration des secondes zones d'extrémité de section transversale des barres profilées, logées dans les encoches, et réalise, à distance radiale du premier bord de support de barres profilées dirigé vers la face d'entrée du tamis, une contre-dépouille dans laquelle s'engage une protubérance de la section transversale de la barre profilée, de sorte que les barres profilées, avec leurs secondes zones d'extrémité de section transversale, dans la direction radiale par rapport à l'axe de tamis ainsi que dans la direction périphérique du tamis, sont maintenues par complémentarité de forme dans les encoches des supports de barres profilées, et font saillie, avec leurs premières zones d'extrémité de section transversale, dans la direction radiale, au-delà des premiers bords des supports de barres profilées, le procédé prévoyant tout d'abord de munir les supports de barres profilées d'encoches qui sont un peu plus grandes que les secondes zones d'extrémité de section transversale des barres profilées, puis d'insérer les barres profilées dans les encoches des supports de barres profilées, et finalement de serrer les barres profilées dans leurs encoches par une déformation plastique des supports de barres profilées,
**caractérisé en ce que** les supports de barres profilées, sur le côté des barres profilées éloigné de leurs premiers bords, sont déformés de manière plastique de façon telle, que suite à un refoulement de matériau des supports de barres profilées en direction des premiers bords des supports de barres profilées, les protubérances des barres profilées sont pressées, dans cette direction, contre les contre-dépouilles.

30. Procédé selon la revendication 29, **caractérisé en ce que** les supports de barres profilées sont cintrés en anneaux fermés, seulement après l'insertion des barres profilées dans les encoches des supports de barres profilées.

31. Procédé selon la revendication 29 ou 30, **caractérisé en ce que** la déformation plastique des supports de barres profilées, produisant le refoulement de matériau, est effectuée sur les supports de barres profilées déjà en forme d'anneau.

32. Procédé selon l'une ou plusieurs des revendications 29 à 31, **caractérisé en ce que** la déformation plastique est effectuée au moyen d'un outil de compression.

33. Procédé selon la revendication 32, **caractérisé en ce que** pour la déformation plastique d'un support de barres profilées, produisant le refoulement de matériau, celui-ci est serré entre un galet de compression et une butée conjuguée, et le galet de compression y compris la butée conjuguée et le support de barres profilées sont déplacés relativement l'un par rapport à l'autre dans la direction longitudinale du support de barres profilées, de façon à ce que le galet de compression passe au niveau de toutes les barres profilées de la série de barres profilées.

34. Procédé selon la revendication 33, **caractérisé en ce que** l'on utilise également un galet de compression en guise de butée conjuguée.

35. Procédé selon la revendication 33 ou 34, **caractérisé en ce que** l'on utilise un galet de compression présentant un profilé circonférentiel en forme de nervure.

36. Procédé selon l'une ou plusieurs des revendications 29 à 35, **caractérisé en ce que** par la déformation plastique, on engendre dans une surface du support de barres profilées, qui s'étend transversalement à la direction longitudinale des barres profilées, une rainure s'étendant le long de la totalité de la série des barres profilées.

37. Procédé selon la revendication 36, **caractérisé en ce que** la rainure est engendrée si près des barres profilées, que le matériau du support refoulé à cette occasion, forme un bourrelet s'appuyant contre les barres profilées.
